# EUROPÄISCHE PATENTSCHRIFT

(11) **EP 2 682 866 B1**
(45) Veröffentlichungstag und Bekanntmachung des Hinweises auf die Patenterteilung: **26.02.2020**
(21) Anmeldenummer: 13171595.5
(22) Anmeldetag: 12.06.2013
(51) Int. Cl.: G06F 8/51

(54) **Verfahren zur Umsetzung von Datenformaten**
Methods for the implementation of data formats
Procédé de conversion de formats de données

(30) Priorität: 04.07.2012 DE 102012105981
(43) Veröffentlichungstag der Anmeldung: 08.01.2014
(73) Patentinhaber: Triple-S GmbH, 93152 Nittendorf (DE)
(72) Erfinder: Hübl, Josef, 93152 Nittendorf (DE)
(74) Vertreter: Glück Kritzenberger Patentanwälte PartGmbB

(56) Entgegenhaltungen:
- Derek Walker Dominique , Dominique Petitpierre , Susan Armstrong: "XMLTrans: a Java-based XML Transformation Language for Structured Data", Proc. of Coling 2000, 1. Januar 2000 (2000-01-01), Seiten 1136-1140, XP002713258, Gefunden im Internet: URL:http://citeseerx.ist.psu.edu/viewdoc/s ummary?doi=10.1.1.28.1625 [gefunden am 2013-09-19]

## Beschreibung

Die Erfindung betrifft ein Verfahren zur Umsetzung zumindest eines ersten Datenblocks mit einem ersten Datenformat in zumindest einen zweiten Datenblock mit einem zweiten Datenformat gemäß dem Oberbegriff des Patentanspruchs 1.

Verfahren zur Umsetzung von Datenformaten sind bereits bekannt, beispielsweise die Programmiersprache XSLT zur Transformation von XML-Dokumenten oder die Beschreibungssprache ASN.1 Ferner ist aus der Druckschrift US 2010/0082706 A1 ein Verfahren zur Umsetzung von Daten mittels eines Transformationsmakros bekannt geworden.

Derek Walker Dominique , Dominique Petitpierre , Susan Armstrong: "XMLTrans: a Java-based XML Transformation Language for Structured Data", Proc. of Coling 2000, 1. Januar 2000 (2000-01-01), Seiten 1136-1140, offenbart eine Transformationssprache für strukturierte Daten. Dabei wird ein Eingangsdatenblock, der ein XML-Datenformat aufweist, in einen HTML-Code umgesetzt. Zur Umsetzung wird ein Transformationscode verwendet, der Transformationsregeln enthält.

Die grundsätzliche Aufgabe in der Softwareentwicklung besteht darin, in vielen Arbeitschritten aus von Menschen lesbaren Spezifikationen einen von einer Prozessoreinheit ausführbaren Maschinencode zu erzeugen. Ein einzelner Arbeitsschritt besteht dabei darin, den Inhalt von ein oder mehreren Dateien in ein oder mehrere andere Dateien umzusetzen, wobei sich das Datenformat immer mehr einer Norm annähert und damit automatisiert bearbeitbar wird. Zum Beispiel bestehen die letzten Schritte in dieser Prozesskette darin, sogenannten Quellcode in einer normierten Programmiersprache zu erstellen und diesen wiederum in den, von einer Prozessoreinheit ausführbaren Maschinencode zu überführen. Gerade dieser letzte Schritt wird bereits seit den Anfängen der Informatik automatisiert mittels Computer durchgeführt, wobei schon bei einem kleinen Softwareprojekt hunderte bis tausende Dateien verarbeitet werden müssen. Die letzten zehn bis fünfzehn Jahre der Informatikbranche waren stark davon geprägt Dateiformate immer mehr branchenübergreifend oder wenn möglich international zu normieren oder zumindest innerbetrieblich zu standardisieren, um damit auch entsprechende Arbeitsschritte bzw. komplette innerbetriebliche Abläufe routinebasiert durchführen zu können.

Sobald jedoch die Dateiformate der Eingangsdateien und Ausgangsdateien eines Arbeitsschrittes im Bezug auf diesen Arbeitsschritt normiert sind, bietet es sich geradezu an diesen Arbeitsschritt automatisiert mittels Computer durchzuführen. Dies erfordert es aber, dass ein spezielles Computerprogramm bzw. eine spezielle Software erstellt wird, mit der die Eingangsdateien im vorgegebenen Format gelesen und daraus die Ausgangsdateien im vorgegebenen Format erzeugt werden können.

Nach Stand der Technik erfordert das Erstellen einer solchen Software seinerseits ein Softwareprojekt mit all seinen Prozessschritten ins Leben zu rufen und abschießend durchzuführen, welches in den meisten Fällen jedoch so aufwendig ist, dass man von einer automatisierten Durchführung eines Arbeitsschrittes durch den Computer wieder Abstand nimmt, auch wenn dieser Arbeitsschritt aus dem für den Menschen nervenaufreibenden, weil nicht selten hundertfach zu wiederholendem gleichem Vorgang besteht, Daten aus einer Datei zu kopieren und in eine andere Datei wieder einzufügen. Darunter leidet selbstredend auch die Qualität der Ausgangsdateien.

Es besteht somit ein grundsätzlicher Bedarf darin, ein computerimplementiertes Verfahren zur Verfügung zu stellen, das es erlaubt Eingangsdateien mit einem bestimmten Format in Ausgangsdateien mit einem bestimmten anderen Format umzusetzen, ohne auf bestimmte Datenformate spezialisiert zu sein.

Wird eine Datei bzw. ein Dateiinhalt verallgemeinert als Datenblock betrachtet, so besteht die Aufgabe der Erfindung darin, ein computerimplementiertes Verfahren zur Umsetzung mindestens eines ersten Datenblocks mit einem ersten Datenformat in zumindest einen zweiten Datenblock mit einem zweiten Datenformat bereitzustellen, wobei der Anwender die Datenformate weitestgehend frei bestimmen kann und damit das aufwendige und kostenintensive Entwickeln einer speziellen Software zur Umsetzung der gerade gegebenen Datenformate entfällt. Die Aufgabe wird ausgehend vom Oberbegriff des unabhängigen Patentanspruchs 1 durch dessen kennzeichnende Merkmale gelöst.

Unter dem Begriff "Datentyp" wird nachfolgend entweder ein regulärer Datentyp, ein elementarer Datentyp oder ein komplexer Datentyp verstanden, wobei
a) ein regulärer Datentyp durch einen regulären Ausdruck definiert wird,
b) ein elementarer Datentyp durch einen vordefinierten regulären Ausdruck definiert wird wie er beispielsweise für INTEGER, FLOAT, BOOL, STRING etc. vorausgesetzt wird und
c) ein komplexer Datentyp mit seinem Namen auf die Definition eines Datenstrukturtypen verweist.

Bei dem speziellen elementaren Datentypen WHITESPACES handelt es sich um eine beliebig lange Zeichenkette, die ausschließlich die Zeichen <Zwischenraum >, <Tabulator>, <Wagenrücklauf> und <NeueZeile> enthalten darf.

Bei dem Begriff "Datenstrukturelement" wird zwischen festen oder variablen Datenstrukturelementen unterschieden, wobei feste Datenstrukturelemente durch eine konstante Zeichenkette wie zum Beispiel 'Dies ist ein festes Datenstrukturelement' gegeben sind. Variable Datenstrukturelemente dagegen können verschiedene Werte annehmen, die Wertemenge ist aber über einen gegeben Datentypen eingeschränkt. Variablen Datenstrukturelementen kann auch ein Name zugewiesen sein, über den auf den Wert des Datenstrukturelements referenziert werden kann.

Unter dem Begriff "Datenstrukturtyp" wird ein Konstrukt zur Abbildung einer Datenstruktur verstanden, wobei dieses Konstrukt aus dem Namen des Datenstrukturtypen und dem Namen einer Strukturkategorie mit deren Parametern besteht, es sich bei diesen Strukturparametern entweder um feste oder variable Datenstrukturelemente mit, falls vorhanden, eindeutigem Namen handelt und die Strukturkategorie festlegt, wie die Strukturparameter zur Analyse des Datenblocks angewendet werden.

Beispielsweise legt die Strukturkategorie "SEQUENCE" fest, dass die Datenstruktur aus den als Strukturparameter gegebenen Datenstrukturelementen in genau in der gegebenen Reihenfolge gebildet wird, wogegen beispielsweise die Strukturkategorie "CHOICE" festlegt, dass die Datenstruktur aus genau einem der als Strukturparameter gegebenen Datenstrukturelemente besteht. Über den Datenstrukturtypen kann beispielsweise das erste Datenformat des ersten Datenblocks abgebildet werden. Dabei wird über dessen Strukturkategorie festgelegt, wo sich im ersten Datenblock die festen Datenstrukturelement mit ihrem gegeben festen Wert befinden und wo sich im ersten Datenblock die konkreten Werte für die variablen Datenstrukturelemente befinden. Diese können extrahiert und zur Weiterverarbeitung in einer Datenstrukturinstanz gespeichert werden.

Unter dem Begriff "Datenstrukturinstanz" wird nachfolgend ein Satz konkreter Datenwerte mit eindeutigem Namen verstanden, wobei innerhalb des Datensatzes jedem variablen Datenstrukturelement mit Namen genau ein konkreter Wert aus dem Datensatz zugeordnet ist und dieser konkrete Wert ein zulässiger Wert im Bezug auf den Datentypen des zugeordneten variablen Datenstrukturelements ist.

Da jede Datenstrukturinstanz einen eindeutigen Namen besitzt und innerhalb der Definition eines komplexen Datentypen jedes benannte variable Datenstrukturelement wiederum einen eindeutigen Namen besitzt, kann jedem benannten variablen Datenstrukturelement einer Datenstrukturinstanz eine eindeutige ID (Identifier) zugeordnet werden, die aus der sequenziellen Anordnung des Namen der Datenstrukturinstanz und den Namen aller Datenstrukturelementen besteht, in denen das anzusprechende Datenstrukturelement enthalten ist. Vorzugsweise werden in dieser sequenziellen Anordnung die Namen durch ein spezifisches Zeichen (z.B. ,:') getrennt, das nicht Bestandteil eines Namen sein kann. Ist beispielsweise XXX der Name einer Datenstrukturinstanz, in deren komplexen Datenstrukturtypen ein variables Datenstrukturelement mit dem Namen YYY existiert, so kann auf dieses mit der eindeutigen ID XXX:YYY zugegriffen werden. Ist diesem Datenstrukturelement XXX:YYY wiederum ein komplexer Datenstrukturtyp zugeordnet, der seinerseits ein variables Datenstrukturelement mit Namen ZZZ besitzt, so kann auf dieses mit der eindeutigen ID XXX:YYY:ZZZ zugegriffen werden, usw.

Unter dem Begriff "Datenformatmuster" wird nachfolgend ein Konstrukt aus zumindest einem festen Datenformatelement und/oder zumindest einem variablen Datenformatelement verstanden. Mittels der festen Datenformatelemente wird unmittelbar eine entsprechende Ausgabe an gegebener Stelle im zweiten Datenblock erreicht. Die variablen Datenformatelemente verweisen über die ID eines variablen Datenstrukturelements einer Datenstrukturinstanz auf dessen Wert, der an gleicher Stelle statt des variablen Datenformatelements in den zweiten Datenblock ausgegeben wird.

Zusätzlich kann ein Datenformatmuster Anweisungen enthalten, die bestimmen, unter welchen Bedingungen bestimmte Teile des Datenformatmusters keine Ausgabe oder eine wiederholte Ausgabe in den zweiten Datenblock erzeugen.
Des weiteren kann ein Datenformatmuster Anweisungen enthalten, mit denen vergleichbar zu einer herkömmlichen Programmiersprache die Werte von Datenstrukturinstanzen bzw. deren Datenstrukturelemente mittels Operationen kombiniert und verändert werden können. Mittels des Datenformatmusters wird das zweite Datenformat und damit insbesondere der strukturelle Aufbau des zweiten Datenblocks festgelegt.

Der wesentliche Aspekt des erfindungsgemäßen Verfahrens zur Umsetzung zumindest eines ersten Datenblocks mit einem ersten Datenformat in zumindest einen zweiten Datenblock mit einem zweiten Datenformat mittels einer Rechnereinheit, die zumindest einen Prozessor und zumindest eine Speichereinheit aufweist, besteht darin, dass der erste Datenblock durch den Prozessor eingelesen wird, dass das erste Datenformat durch zumindest einen Datenstrukturtypen abgebildet wird, der feste Datenstrukturelemente und variable Datenstrukturelemente definiert, wobei den variablen Datenstrukturelementen des Datenstrukturtypen jeweils ein Datentyp und mindestens einem variablen Datenstrukturelement auch ein Name zugewiesen wird, dass unter Verwendung der festen Datenstrukturelemente und der Datentypen der variablen Datenstrukturelemente durch den Prozessor aus dem ersten Datenblock zumindest eine erste Datenstrukturinstanz mit zumindest einem Datenstrukturinstanzelement erzeugt und in der Speichereinheit abgelegt wird, wobei auf den Wert des Datenstrukturinstanzelements über seine ID direkt zugegriffen werden kann, dass der zweite Datenblock aus einem Datenformatmuster unter Verwendung der ersten Datenstrukturinstanz oder zumindest einer aus der ersten Datenstrukturinstanz abgeleiteten zweiten Datenstrukturinstanz mittels des Prozessors erzeugt wird, wobei das Datenformatmuster feste Datenformatelemente und variable Datenformatelemente aufweist und die variablen Datenformatelemente über genau eine ID auf die in der Speichereinheit abgelegten Werte der Datenstrukturinstanzelemente der ersten oder zweiten Datenstrukturinstanz verweisen und dass der zweite Datenblock entsprechend den im Datenformatmuster hinterlegten Anweisungen durch den Prozessor ausgegeben wird.

Das erfindungsgemäße Verfahren bietet den entscheidenden Vorteil, dass der erste Datenblock anhand zumindest eines Datenstrukturtypen analysiert und daraus eine korrespondierende Datenstrukturinstanz erstellt wird, wobei durch den Datenstrukturtypen festgelegt ist, welche den variablen Datenstrukturelementen des Datenstrukturtypen entsprechende Datenblockbereiche als Werte den Datenstrukturelementen der Datenstrukturinstanz zugewiesen werden sollen. Auf diese Werte kann zu einem späteren Zeitpunkt über die ID eines Datenstrukturelements zugegriffen werden.

Ein weiterer Vorteil des erfindungsgemäßen Verfahrens ist es, dass nach diesem Analyseschritt anhand des Datenformatmusters und unter Zugriff auf die zuvor generierte Datenstrukturinstanz der zweite Datenblock erzeugt wird, wobei dessen Datenformat unmittelbar von dem bei der Erzeugung des zweiten Datenblocks verwendeten Datenformatmusters abhängt. Das Datenformatmuster weist hierbei neben festen Datenformatelementen, die unmittelbar und unverändert im zweiten Datenblock eingefügt werden, variable Datenformatelemente auf, die über den Zugriff auf Werte der Datenstrukturinstanzelemente der in der Speichereinheit abgelegten Datenstrukturinstanz befüllt werden. Dadurch wird ein äußerst flexibles und anpassbares Verfahren zur Umsetzung von einem ersten Datenformat in ein zweites Datenformat geschaffen. Insbesondere wird durch das erfindungsgemäße Verfahren eine Verbindung zwischen den mit der Metasprache EBNF (extended Backhaus-Naur-Form) spezifizierten Dateiformaten und den mit einer herkömmlichen Programmiersprache spezifizierten Datenstrukturinstanzen hergestellt.

Besonders bevorzugt wird anhand vorausgehender fester Datenstrukturelemente des Datenstrukturtyps zumindest einem Datenstrukturinstanzelement ein Wert aus dem ersten Datenblock zugewiesen. Die festen Datenstrukturelemente des Datenstrukturtypen dienen damit als Orientierungshilfe sowohl für die die Analyse des ersten Datenblocks vornehmende Rechnereinheit als auch als Orientierungshilfe für den jeweiligen Benutzer, insbesondere bei der Entwicklung eines ersten Datenformats aus einem gegeben ersten Beispieldatenblock, wobei die Position der variablen Datenstrukturelemente anhand der festen Datenstrukturelemente leichter bestimmt werden kann.

In einem bevorzugten Ausführungsbeispiel werden mehrere erste Datenblöcke unter Verwendung ein oder mehrerer Datenstrukturtypen und ein oder mehrere Datenformatmuster in ein oder mehrere zweite Datenblöcke umgewandelt. Dadurch kann das unnötige mehrmalige Einlesen bzw. Analysieren erster Datenblöcke zur Umsetzung in mehrere verschiedene zweite Datenblöcke vermieden werden.

Besonders bevorzugt werden mehrere formatgleiche erste Datenblöcke unter Verwendung eines einzigen Datenstrukturtypen in ein oder mehrere zweite Datenblöcke umgewandelt. Durch die Umwandlung mehrerer formatgleicher erster Datenblöcke durch einen einzigen Datenstrukturtypen ist eine zeit- und kostensparende Umwandlung der ersten Datenblöcke in den zumindest einen Datenblock möglich, da es lediglich einer Anpassung eines einzigen Datenstrukturtypen an das erste Datenformat der formatgleichen ersten Datenblöcke bedarf.

Weiterhin bevorzugt wird zur Erzeugung mehrerer formatgleicher zweiter Datenblöcke ein einziges Datenformatmuster verwendet. Auch hier ist eine zeit- und kostengünstige Umwandlung in die formatgleichen zweiten Datenblöcke möglich, da lediglich ein einziges Datenformatmuster an das zweite Datenformat dieser formatgleichen zweiten Datenblöcke anzupassen ist.

Besonders bevorzugt werden mehrere veränderte, aber formatgleiche erste Datenblöcke unter Verwendung des erfindungsgemäßen Verfahrens in ein oder mehrere veränderte, aber formatgleiche zweite Datenblöcke umgewandelt.
Dies stellt den in der Praxis den häufigsten Anwendungsfall des erfindungsgemäßen Verfahrens dar, der darin besteht, dass der Inhalt der zweiten Datenblöcke entsprechend den geänderten Inhalten erster Datenblöcke aktualisiert werden muss, wobei alle gegeben Datenformate gleich bleiben. In diesen Fall bewirkt ein Knopfdruck, der das erfindungsgemäße Verfahren zur Ausführung bringt, die Durchführung eines gesamten Prozessschrittes in Sekundenschnelle.

In einem bevorzugten Ausführungsbeispiel wird der zumindest eine erste Datenblock aus einer in der Speichereinheit abgelegten Eingangsdatei eingelesen und der zumindest eine zweite Datenblock nach seiner Erzeugung in eine Ausgangsdatei in der Speichereinheit geschrieben, wobei in einer Anweisungsliste festgelegt wird, welcher erster Datenblock aus welcher Eingangsdatei eingelesen und welcher zweiter Datenblock in welche Ausgangsdatei geschrieben wird und der zumindest eine Datenstrukturtyp bzw. das zumindest eine Datenformatmuster, die zur Umwandlung der Datenformate benötigt werden, referenziert sind. Alternativ hierzu kann der erste Datenblock auch als Datenstrom mit zeitlich aufeinanderfolgenden Datenblockbereichen vorliegen, der an einer Eingangsschnittstelle der Rechnereinheit eingelesen wird. Weiterhin kann auch der zweite Datenblock als Datenstrom an einer Ausgangsschnittstelle ausgegeben werden.

Besonders bevorzugt wird der zumindest eine Datenstrukturtyp und das zumindest eine Datenformatmuster vor ihrer Verwendung jeweils aus zumindest einer in der Speichereinheit abgelegten Datei geladen und wird in einer Anweisungsliste festgelegt, welcher Datenstrukturtyp und/oder welches Datenformatmuster aus welcher Datei einzulesen ist. Das Einlesen des Datenformatmusters bzw. des Datenstrukturtypen aus der Speichereinheit der Rechnereinheit birgt den Vorteil, dass die Rechnereinheit erst zur Laufzeit des Programms instruiert wird, auf welche Art und Weise die Umwandlung des ersten Datenformats in das zweite Datenformat zu erfolgen hat. Dadurch ist eine äußerst flexible Anpassung des Verfahrens an die Gegebenheiten möglich. Ebenfalls kann die Anweisungsliste vor ihrer Ausführung aus einer in der Speichereinheit abgelegten Datei geladen werden.

In einem bevorzugten Ausführungsbeispiel ist jeder Datenstrukturinstanz genau ein korrespondierender Datenstrukturtyp zugeordnet. Damit wird eine Datenstrukturinstanz genau durch einen Datenstrukturtypen, und zwar durch deren variable Datenstrukturelemente gebildet, wobei in einer Datenstrukturinstanz jeweils nur Datenstrukturinstanzelemente bzw. Werte vorhanden sein können, die aus einem ersten Datenblock stammen.

Ebenso wird bevorzugt jeder zweite Datenblock durch genau ein korrespondierendes Datenformatmuster erzeugt. Dabei ist es auch hier möglich, dass mehrere zweite formatgleiche Datenblöcke durch ein einziges Datenformatmuster erzeugt werden.

Bei der Umwandlung des ersten Datenblocks in den zweiten Datenblock kann bevorzugt zumindest ein Wert eines Datenstrukturinstanzelements der zumindest einen ersten Datenstrukturinstanz durch zumindest eine Operation verändert werden, wobei die Operation Werte verschiedener Datenstrukturelemente verschiedener erster Datenstrukturinstanzen kombinieren kann. Insbesondere kann es sich dabei um arithmetische Operationen handeln oder Operationen, die eine Datentypumwandlung an Werten der Datenstrukturinstanzelemente vornehmen. Die so veränderte Datenstrukturinstanz kann anschließend zur Erzeugung des zweiten Datenblock verwendet werden.

Besonders bevorzugt können aus ein oder mehreren ersten Datenstrukturinstanzen durch ein oder mehrere Operationen ein oder mehrere zweite Datenstrukturinstanzen gebildet werden, die anschließend zur Erzeugung des zweiten Datenblocks verwendet werden.

Vergleichbar zu einer herkömmlichen Programmiersprache können diese Operationen zu einer wiederholt aufrufbaren Prozedur zusammengefasst werden, deren Parameter die Datenstrukturtypen der ersten und zweiten Datenstrukturinstanzen wiedergeben.

Besonders bevorzugt wird bei den einer Strukturkategorie als Strukturparameter übergebenen Datenstrukturelementen statt des Namen eines komplexen Datentypen unmittelbar die Definition eines komplexen Datenstrukturtypen angegeben. Somit kann innerhalb der Definition eines komplexen Datenstrukturtypen, und zwar insbesondere innerhalb der der Strukturkategorie übergebenen Strukturparameter ein weiterer komplexer Datenstrukturtyp definiert werden. Dies ist insbesondere dann vorteilhaft, wenn der komplexe Datenstrukturtyp nur einmalig verwendet werden soll.

In besondere Weise unterstützt das erfindungsgemäße Verfahren die Verarbeitung von sogenannten Whitespace-Zeichen, welches die Zeichen <Zwischenraum >, <Tabulator>, <Wagenrücklauf> und <NeueZeile> sind, in dem, wenn nicht extra ausgeschlossen, alle im ersten Datenblock einen Whitespace-Zeichen nachfolgenden Whitespace-Zeichen ignoriert werden.

Die Analyse eines ersten Datenblocks mittels eines ersten Datenstrukturtypen erfolgt sequenziell ab einer aktuellen Leseposition, wobei die aktuelle Leseposition die dem ersten Zeichen im ersten Datenblock nach dem zuletzt erkannten festen oder variablen Datenstrukturelement folgende Position ist. Dabei gelten feste Datenstrukturelemente als erkannt, wenn die Zeichenkette nach der Leseposition, unter oben genannter Sonderbehandlung von Whitespace-Zeichen, genau dem gegebenen Wert des festen Datenstrukturelements entspricht. Ein variables Datenstrukturelemente dagegen gilt als erkannt, wenn die Zeichenkette nach der Leseposition, unter oben genannter Sonderbehandlung von Whitespace-Zeichen, einen Wert repräsentiert, der dem Datentypen des variablen Datenstrukturelements entspricht.

Insbesondere wird vorteilhaft durch eine erste Strukturkategorie (SEQUENCE) festgelegt, dass sämtliche, als Strukturparameter übergebene Datenstrukturelemente, unter oben genannter Sonderbehandlung von Whitespace-Zeichen, nacheinander und in genau der angegeben Reihenfolge im ersten Datenblock an der aktuellen Einleseposition vorkommen müssen.

Weiterhin kann durch eine zweite Strukturkategorie (STREAM) festgelegt werden, dass sämtliche, als Strukturparameter übergebene Datenstrukturelemente, unter oben genannter Sonderbehandlung von Whitespace-Zeichen, nacheinander und in genau der angegeben Reihenfolge im ersten Datenblock nach der aktuellen Leseposition vorkommen müssen, wobei sich der Wert des Datenstrukturinstanzelements aus den Zeichen des ersten Datenblocks zwischen der aktuellen Leseposition und dem ersten nach der aktuellen Leseposition erkannten Datenstrukturelement ergibt. Durch die Verwendung der zweiten Strukturkategorie (STREAM) wird aus dem ersten Datenblock eine Zeichenkette ab der Leseposition gewonnen, der alle angegebenen Strukturparameter nacheinander und in genau der angegebenen Reihenfolge nachfolgen.

Ferner kann durch eine dritte Strukturkategorie (LIST) festgelegt werden, dass sämtliche als Strukturparameter übergebene Datenstrukturelemente, unter oben genannter Sonderbehandlung von Whitespace-Zeichen, nacheinander und in genau der angegeben Reihenfolge im ersten Datenblock an der aktuellen Leseposition mindestens einmal vorkommen müssen, aber wiederholt vorkommen können. Somit ist über diese dritte Strukturkategorie eine Abarbeitung von Listen möglich, deren Listenstruktur an sich bekannt ist, jedoch die Länge der Liste, d.h. die Anzahl der Listeneinträge unbekannt bzw. variabel ist.

Weiterhin kann durch eine vierte Strukturkategorie (OPTION) festgelegt werden, dass sämtliche, als Strukturparameter übergebene Datenstrukturelemente, unter oben genannter Sonderbehandlung von Whitespace-Zeichen, nacheinander in genau der angegeben Reihenfolge im ersten Datenblock an der aktuellen Leseposition höchstens einmal oder gar nicht vorkommen dürfen, wobei in der korrespondierenden Datenstrukturinstanz über eine Marke festgehalten wird, ob die Datenstrukturelemente im ersten Datenblock vorhanden sind oder nicht. Durch diese vierte Strukturkategorie ist es damit möglich, den ersten Datenblock daraufhin zu untersuchen, ob bestimmte Datenblockbereiche darin vorhanden sind oder nicht, wobei in der Datenstrukturinstanz durch die Marken, die insbesondere boolesche Variablen sind, feststellbar ist, ob der betreffende Datenblockbereich im ersten Datenblock enthalten war oder nicht.

Ferner kann durch eine fünfte Strukturkategorie (PERMUTATION) festgelegt werden, dass sämtliche als Strukturparameter übergebene Datenstrukturelemente eines komplexen Datenstrukturtypen, unter oben genannter Sonderbehandlung von Whitespace-Zeichen, im ersten Datenblock an der aktuellen Leseposition nacheinander genau einmal vorkommen müssen, die Reihenfolge aber beliebig ist. Durch diese fünfte Strukturkategorie ist es möglich, variablen Datenstrukturelementen einen bestimmten Datenblockbereich als Wert zuzuweisen, wobei die Positionen der Blockbereiche zwar grundsätzlich bekannt sind, jedoch nicht die Reihenfolge, in der diese im ersten Datenblock auftreten.

Des Weiteren kann durch eine sechste Strukturkategorie (CHOICE) festgelegt werden, dass unter vorgenannter Sonderbehandlung von Whitespace-Zeichen, genau eines der als Strukturparameter übergebenen Datenstrukturelemente des Datenstrukturtypen im ersten Datenblock an der aktuellen Leseposition vorkommen muss, wobei nur diesem ein Wert zugewiesen wird, und alle andern in der ersten Datenstrukturinstanz als nicht vorhanden markiert werden. Über diese sechste Strukturkategorie kann damit festgestellt werden, welches Datenstrukturelement einer Auswahl von als Strukturparameter übergebenen Datenstrukturelementen in dem ersten Datenblock vorhanden war.

Zudem kann durch eine siebte Strukturkategorie (NESTED), der als Strukturparameter ein erstes, optional ein mittleres und ein letztes Datenstrukturelement übergeben wird, festgelegt werden, dass unter vorgenannter Sonderbehandlung von Whitespace-Zeichen, der mit dem ersten Datenstrukturelement beginnende, das sofern vorhandene, mittlere, unmittelbar folgende und mit dem eventuell mit Abstand folgenden letzten Datenstrukturelement endende Datenblockbereich gesucht und als Wert einem Datenstrukturinstanzelement zugewiesen wird, wobei die Anzahl des auftretenden ersten Datenstrukturelements mit der Anzahl des Auftreten des letzten Datenstrukturelements identisch sein muss. Damit können Blöcke gefunden werden, die durch das erste und letzte Datenstrukturelement geklammert sind und ihrerseits solche Blöcke als Unterblock enthalten können, wobei nicht notwendigerweise die Struktur des gesamten Datenblockbereichs bekannt sein muss, sondern nur dessen Beginn und Ende. Dies ist insbesondere bei Klammerausdrücken vorteilhaft.

Insbesondere wird vorteilhaft durch eine achte Strukturkategorie (LINE) festgelegt, dass sämtliche, als Strukturparameter übergebene Datenstrukturelemente, unter vorgenannter Sonderbehandlung von Whitespace-Zeichen, nacheinander und in genau der angegeben Reihenfolge im ersten Datenblock an der aktuellen Leseposition vorkommen müssen, und zwar innerhalb einer Zeile. Somit darf im ersten Datenblock nach der Lesesposition kein <NeueZeile>-Zeichen zwischen dem ersten und letzten als Strukturparameter übergebenen Datenstrukturelement auftreten. Damit wird in besonderer Weise ein zeilenorientiertes Datenformat des ersten Datenblocks unterstützt.

In einem bevorzugten Ausführungsbeispiel werden Teile des Datenformatmusters mittels Bedingungsanweisungen von der Erzeugung des zweiten Datenblocks ausgeschlossen. Dadurch ist es möglich, dass abhängig von Werten von Datenstrukturinstanzelementen oder dem Vorhandensein bestimmter Datenstrukturinstanzelemente bestimmte Ausgaben im zweiten Datenblock erzeugt werden. Ebenso können Wiederholungsanweisungen im Datenformatmuster vorgesehen sein, über die eine Verarbeitung von Elementen einer Liste erfolgt. So kann beispielsweise in der Datenstrukturinstanz eine Liste mit mehreren Listeneinträgen vorgesehen sein, die anschließend mittels der Wiederholungsanweisungen im Datenformatmuster zu entsprechenden Ausgaben im zweiten Datenblock führen.

In einem bevorzugten Ausführungsbeispiel wird in einem Datenformatmuster auf selbiges oder ein oder mehrere andere Datenformatmuster referenziert. So ist es möglich, dass aus einem Datenformatmuster heraus dasselbe Datenformatmuster erneut zur Erzeugung eines Datenblockabschnitts des zweiten Datenblocks verwendet wird. Dies setzt jedoch voraus, dass bei der Selbstreferenzierung eine Abbruchbedingung vorhanden ist, sodass keine unendliche Schleife entsteht. Die Referenzierung auf weitere Datenformatmuster birgt den Vorteil, dass das Ursprungs-Datenformatmuster, aus dem heraus die Referenzierung auf weitere Datenformatmuster erfolgt, übersichtlich bleibt und damit eine hohe Benutzerfreundlichkeit für den jeweiligen Softwareprogrammierer erreicht wird.

In einem bevorzugten Ausführungsbeispiel werden in einem Datenformatmuster lokal bekannte zweite Datenstrukturinstanzen erzeugt, deren Werte verändert und anschließend zur Generierung des zweiten Datenblocks weiterverwendet werden. So ist es beispielsweise möglich, die ursprünglich erzeugte erste Datenstrukturinstanz in der Speichereinheit zu erhalten und die Werteveränderung in der neu generierten, zweiten Datenstrukturinstanz vorzunehmen.

Besonders bevorzugt wird durch das zweite Datenformatmuster das zweite Datenformat des zweiten Datenblocks vorgegeben. Dadurch wird das sogenannte WYSIWYG-Prinzip (what you see is what you get) unterstützt. Insbesondere besteht das Datenformatmuster aus festen Datenformatelementen, die zumeist normaler Text sind, wobei diese festen Datenformatelemente unverändert und in der im Datenformatmuster angegebenen Reihenfolge in dem zweiten Datenblock ausgegeben werden. Insbesondere sind die festen Datenformatelemente nicht besonders gekennzeichnet, sondern ergeben sich aus den Zeichen zwischen den besonders gekennzeichneten variablen Datenformatelementen oder Befehlssequenzen. Die Unterscheidung der variablen Datenstrukturelemente und Befehlssequenzen von den festen Datenstrukturelementen erfolgt durch definierte, das variable Datenformatelement bzw. die Befehlssequenz einleitende und abschließende Zeichen, z.B. $. Dadurch wird eine äußerst benutzerfreundliche Umgebung geschaffen, da der Benutzer aus dem Datenformatmuster die Form des zweiten Datenblocks im Wesentlichen erkennen kann.

Eine weitere Besonderheit des erfindungsgemäßen Verfahrens besteht darin, dass IDs von Datenstrukturelementen über sogenannte Namens-Shortcuts angesprochen werden können. Dabei können am Anfang einer ID beliebig viele Namen weggelassen bzw. durch ein Sonderzeichen (z.B. , ∼') ersetzt werden, solange aus den verbleibenden Namen die ID noch rekonstruierbar ist. Ist beispielsweise XXX:YYY:ZZZ eine ID, so wären :ZZZ, :YYY:ZZZ und XXX: ∼:ZZZ gültige Namens-Shortcuts, sofern keine zweite ID existiert, mit der ein Namenskonflikt auftreten könnte.

Zur verbesserten Handhabung des Verfahrens ist bevorzugt ein graphischer Editor zur Erstellung bzw. Veränderung von Datenstrukturtypen vorgesehen, wobei in einem ersten Ausgabefenster ein erster Datenblock und in einem zweiten Ausgabefenster der zu bearbeitende Datenstrukturtyp dargestellt wird, wobei die mit den variablen Datenstrukturelementen des im zweiten Ausgabefenster dargestellten Datenstrukturtyps korrespondierenden variablen Datenblockbereiche des ersten Datenblocks im ersten Ausgabefenster durch Markierungen graphisch hervorgehoben werden. Mittels des graphischen Editors wird erreicht, dass ein Benutzer durch grafische Kenntlichmachung, beispielsweise durch farbige Hinterlegung der entsprechenden Bereiche erkennt, welche variablen Datenstrukturelemente des Datenstrukturtypen mit den entsprechenden Datenblockbereichen des ersten Datenblocks in Verbindung stehen. Dadurch wird eine erhebliche Erleichterung in der Erstellung von Datenstrukturtypen erreicht.

Bevorzugt wird ein im zweiten Ausgabefenster markiertes Datenstrukturelement gleichzeitig mit dem korrespondierenden Datenblockbereich des ersten Datenblocks im ersten Ausgabefenster markiert und umgekehrt. So kann beispielsweise ein Benutzer ein variables Datenstrukturelement im zweiten Ausgabefenster durch eine entsprechende Benutzerinteraktion auswählen und erfährt über diese Auswahl und die dadurch angestoßene Markierung im ersten Datenblock, welcher Datenblockbereich desselben mit dem markierten Datenstrukturelement korrespondiert. Dadurch wird eine erleichterte Zuordnung der sich entsprechenden Bereiche in den unterschiedlichen Ausgabefenstern erreicht.

Des Weiteren führt eine Veränderung am Datenstrukturtypen im zweiten Ausgabefenster unmittelbar zur geänderten Darstellung der Markierungen im ersten Ausgabefenster. Dadurch werden die Markierungen automatisch an die entsprechenden Änderungen im Datenstrukturtypen angepasst.

Bevorzugt wird auch ein graphischer Editor zur Erstellung bzw. Veränderung von Datenformatmustern bereitgestellt, wobei in einem ersten Ausgabefenster das zu bearbeitende Datenformatmuster, in einem zweiten Ausgabefenster die den variablen Datenformatelementen des Datenformatmusters zugeordneten Werte von Datenstrukturinstanzelementen und in einem dritten Ausgabefenster der durch das Datenformatmuster erzeugte zweite Datenblock dargestellt wird, wobei im ersten Ausgabefenster die variablen Datenformatelemente und im dritten Ausgabefenster die mit diesen variablen Datenformatelementen korrespondierenden Datenblockbereiche des zweiten Datenblocks hervorgehoben werden. Dadurch kann der Benutzer unmittelbar durch die graphische Hervorhebung die jeweils miteinander korrespondierenden Datenformatelemente bzw. Datenblockbereiche des zweiten Datenblocks erkennen, was die Benutzerfreundlichkeit wiederum deutlich erhöht.

In einem bevorzugten Ausführungsbeispiel wird ein im ersten Ausgabefenster markiertes Datenformat gleichzeitig mit dem korrespondierenden Datenstrukturinstanzelement der Datenstrukturinstanz im zweiten Ausgabefenster und gleichzeitig mit dem korrespondierenden Datenblockbereich des zweiten Datenblocks im dritten Ausgabefenster markiert und umgekehrt. Somit kann beispielsweise durch eine Benutzerinteraktion, die zu einer Markierung eines Datenformatelements im ersten Ausgabefenster führt, sowohl das von dem markierten Datenformatelement aufgegriffene Datenstrukturinstanzelement als auch der durch dieses Datenformatelement generierte korrespondierende Datenblockbereich auf der graphischen Benutzeroberfläche erkannt werden.

Weiterhin führt bevorzugt die Veränderung eines Wertes eines Datenstrukturinstanzelements einer Datenstrukturinstanz in einem zweiten Ausgabefenster unmittelbar zur Veränderung des korrespondierenden Datenblockbereichs im zweiten Datenblock im dritten Ausgabefenster und umgekehrt. Damit werden die einander entsprechenden Bereiche bzw. der Datenblockbereich, der durch das veränderte Datenstrukturinstanzelement befüllt wird, an diese Veränderung des Datenstrukturinstanzelements angepasst.

Der Ausdruck "im Wesentlichen" bedeutet im Sinne der Erfindung Abweichungen von jeweils exakten Werten um +/- 10%, bevorzugt um +/- 5% und/oder Abweichungen in Form von für die Funktion unbedeutenden Änderungen.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird nachfolgend anhand eines Ausführungsbeispiels im Zusammenhang mit den Figuren näher erläutert werden. Es zeigen
- Fig. 1: beispielhaft das erfindungsgemäße Verfahren in einem ersten Ausführungsbeispiel in einer schematischen Blockbilddarstellung;
- Fig. 2: beispielhaft das erfindungsgemäße Verfahren in einem zweiten Ausführungsbeispiel in einer schematischen Blockbilddarstellung;
- Fig. 3: beispielhaft die Darstellung eines ersten Datenblocks als Text-Datei;
- Fig. 4: beispielhaft die Darstellung eines Datenstrukturtypen als Text-Datei;
- Fig. 5: beispielhaft die schematische Darstellung einer ersten Datenstrukturinstanz;
- Fig. 6: beispielhaft die Darstellung eines Datenformatmusters als Text-Datei;
- Fig. 7: beispielhaft die Darstellung einer Anweisungsliste als Text-Datei;
- Fig. 8: beispielhaft die Darstellung eines zweiten Datenblocks als Text-Datei;
- Fig. 9: beispielhaft die Verarbeitung mehrerer erster Datenblöcke in mehrere zweite Datenblöcke mittels des erfindungsgemäßen Verfahrens in einer schematischen Blockbilddarstellung;
- Fig. 10: beispielhaft ein Datenstrukturtyp enthaltend die Strukturkategorie STREAM;
- Fig. 11: beispielhaft die schematische Darstellung der durch den Datenstrukturtyp gemäß Fig. 10 entstehenden Datenstrukturinstanz;
- Fig. 12: beispielhaft ein Datenformatmuster zur Generierung eines zweiten Datenblocks fußend auf der Datenstrukturinstanz gemäß Fig. 11;
- Fig. 13: beispielhaft der durch das Datenformatmuster gemäß Fig. 12 generierte zweite Datenblock;
- Fig. 14: beispielhaft ein erster Datenblock enthaltend eine Liste mit mehreren strukturell identisch aufgebauten Listenelementen;
- Fig. 15: beispielhaft ein Datenstrukturtyp enthaltend die Strukturkategorie LIST zur Analyse des ersten Datenblocks gemäß Fig. 14;
- Fig. 16: beispielhaft die durch den Datenstrukturtyp gemäß Fig. 15 entstehende Datenstrukturinstanz;
- Fig. 17: beispielhaft ein Datenformatmuster zur Generierung eines zweiten Datenblocks fußend auf der Datenstrukturinstanz gemäß Fig. 16;
- Fig. 18: beispielhaft der durch das Datenformatmuster gemäß Fig. 17 generierte zweite Datenblock;
- Fig. 19: beispielhaft eine Anweisungsliste enthaltend arithmetische Operationen zur Veränderung der Werte der ersten Datenstrukturinstanz;
- Fig. 20: beispielhaft der durch das Datenformatmuster gemäß Fig. 17 und die Anweisungsliste gemäß Fig. 19 generierte zweite Datenblock;
- Fig. 21: beispielhaft ein im Datenformat umzuwandelnder erster Datenblock;
- Fig. 22: beispielhaft ein Datenstrukturtyp enthaltend die Strukturkategorie OPTION zur Analyse des ersten Datenblocks gemäß Fig. 21;
- Fig. 23: beispielhaft die durch den Datenstrukturtyp gemäß Fig. 22 entstehende Datenstrukturinstanz;
- Fig. 24: beispielhaft ein Datenformatmuster zur Generierung eines zweiten Datenblocks fußend auf der Datenstrukturinstanz gemäß Fig. 23;
- Fig. 25: beispielhaft der durch das Datenformatmuster gemäß Fig. 24 generierte zweite Datenblock;
- Fig. 26: beispielhaft ein weiterer im Datenformat umzuwandelnder erster Datenblock;
- Fig. 27: beispielhaft ein Datenstrukturtyp enthaltend die Strukturkategorie CHOICE zur Analyse des ersten Datenblocks gemäß Fig. 26;
- Fig. 28: beispielhaft die durch den Datenstrukturtyp gemäß Fig. 27 entstehende Datenstrukturinstanz;
- Fig. 29: beispielhaft ein Datenformatmuster zur Generierung eines zweiten Datenblocks fußend auf der Datenstrukturinstanz gemäß Fig. 28;
- Fig. 30: beispielhaft der durch das Datenformatmuster gemäß Fig. 29 generierte zweite Datenblock;
- Fig. 31: beispielhaft ein weiterer im Datenformat umzuwandelnder erster Datenblock;
- Fig. 32: beispielhaft ein Datenstrukturtyp enthaltend einen rekursiven Selbstverweis zur Analyse des ersten Datenblocks gemäß Fig. 31;
- Fig. 33: beispielhaft ein weiterer Datenstrukturtyp, aus dem heraus der Aufruf des Datenstrukturtypen gemäß Fig. 32 erfolgt;
- Fig. 34: beispielhaft die durch die Datenstrukturtypen gemäß Fig. 32 und Fig. 33 entstehende Datenstrukturinstanz;
- Fig. 35: beispielhaft ein Datenformatmuster zur Generierung eines zweiten Datenblocks fußend auf der Datenstrukturinstanz gemäß Fig. 34;
- Fig. 36: beispielhaft ein weiteres Datenformatmuster, aus dem heraus der Aufruf des Datenformatmusters gemäß Fig. 35 erfolgt;
- Fig. 37: beispielhaft das durch die Datenformatmuster gemäß Fig. 35 und Fig. 36 entstehende zweite Datenformat;
- Fig. 38: beispielhaft die verwendete Anweisungsliste zur Erzeugung des zweiten Datenblocks gemäß Fig. 37 aus dem ersten Datenblock gemäß Fig. 31 unter Verwendung der Datenstrukturtypen gemäß Fig. 32 und Fig. 33, sowie den Datenformatmustern gemäß Fig. 35 und Fig. 36.
- Fig. 39: beispielhaft die Darstellung eines grafischen Editors zur Bearbeitung eines Datenstrukturtypen;
- Fig. 40: beispielhaft die Darstellung eines grafischen Editors zur Bearbeitung eines Datenformatmusters;

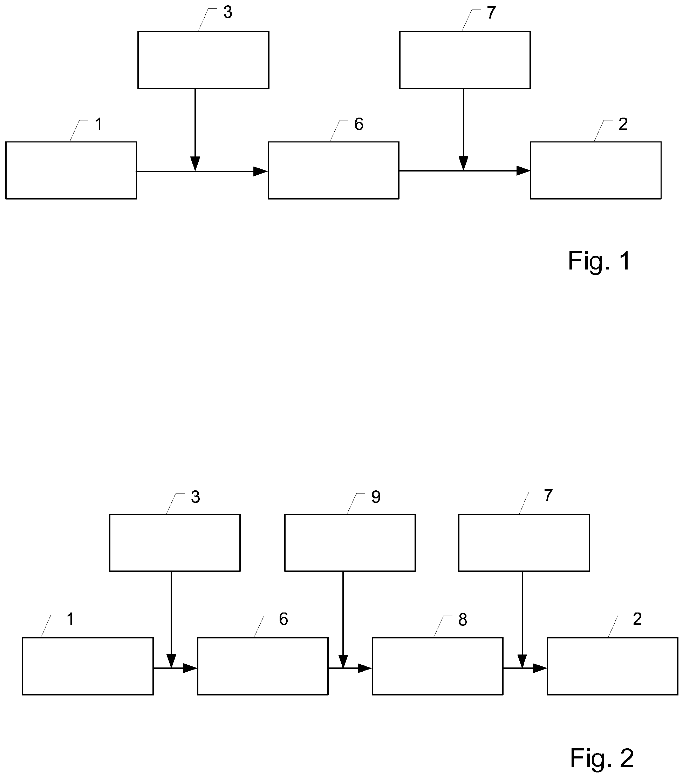

Figur 1 zeigt in einer schematischen Blockdarstellung das erfindungsgemäße Verfahren zur Umsetzung zumindest eines ersten Datenblocks 1, der ein erstes Datenformat aufweist, in zumindest einen zweiten Datenblock 2, der ein zweites Datenformat aufweist, wobei der erste Datenblock 1 in einem ersten Schritt unter Verwendung eines Datenstrukturtypen 3 in eine erste Datenstrukturinstanz 6 und in einem zweiten Schritt diese unter Verwendung eines Datenformatmusters 7 in den zweiten Datenblock 2 umgesetzt wird. Die Implementierung des Verfahrens erfolgt vorzugsweise in einer Rechnereinheit mit zumindest einer Prozessoreinheit und einer Speichereinheit, wobei durch diese Rechnereinheit der erste Datenblock 1 eingelesen und nach der Umsetzung in den zweiten Datenblock dieser zweite Datenblock 2 durch die Rechnereinheit ausgegeben wird. Der erste Datenblock 1 kann hierbei aus einer Datei eingelesen werden, es kann aber auch ein Datenstrom sein, der beispielsweise der Rechnereinheit an einer Schnittstelle zugeführt wird. Ebenso kann der zweite Datenblock 2 in eine Datei geschrieben werden oder als Datenstrom ausgegeben werden.

Die Umsetzung des ersten Datenblocks1 in eine Datenstrukturinstanz 3 erfolgt durch Abbildung des ersten Datenformats des ersten Datenblocks 1 durch zumindest einen Datenstrukturtypen 3, durch den im ersten Datenblock 1 feste Datenstrukturelemente 3.1 und variable Datenstrukturelemente 3.2 definiert werden. Den durch den Datenstrukturtypen 3 definierten variablen Datenstrukturelementen 3.2 wird hierbei im Datenstrukturtypen 3 jeweils ein Datentyp 4 zugewiesen. Ferner wird mindestens einem variablen Datenstrukturelement 3.2 zudem ein Elementname 5 zugewiesen. Anschließend wird in der Rechnereinheit, insbesondere im Prozessor, der erste Datenblock 1 analysiert, wobei unter Verwendung bzw. orientiert an den festen Datenstrukturelementen 3.1 und unter Verwendung des Datentypen 4 der variablen Datenstrukturelemente 3.2 aus dem ersten Datenblock 1 zumindest eine erste Datenstrukturinstanz 6 erzeugt wird. Diese erste Datenstrukturinstanz 6 enthält nach dem Analysevorgang die dem Datenstrukturtypen 3 entsprechenden Datenstrukturinstanzelemente 6.1 mit den Werten aus Datenblock 1. Auf die einzelnen Werte der Datenstrukturinstanzelemente 6.1 kann über den jeweiligen Elementnamen 5 bzw. die ID direkt zugegriffen werden kann.

Anschließend wird durch die Rechnereinheit der zweite Datenblock 2 aus einem Datenformatmuster 7, durch das die Struktur des zweiten Datenblocks 2 vorgegeben wird, unter Verwendung der ersten Datenstrukturinstanz 6 erzeugt. Das Datenformatmuster weist hierbei feste Datenformatelemente 7.1 und variable Datenformatelemente 7.2 auf, wobei die variablen Datenformatelemente 7.2 über den Elementnamen 5 oder die ID auf einen Wert eines Datenstrukturinstanzelements 6.1 der ersten Datenstrukturinstanz 6 verweisen. Die festen Datenformatelemente 7.1 hingegen erscheinen unverändert im zweiten Datenblock 2.

In Figur 2 ist ein zweites Ausführungsbeispiel des erfindungsgemäßen Verfahrens gezeigt. Der wesentliche Unterschied zu dem in Figur 1 gezeigten Verfahren besteht darin, dass die erste Datenstrukturinstanz 6 in eine zweite, von der ersten Datenstrukturinstanz 6 abgeleitete Datenstrukturinstanz 8 überführt wird und zwar durch Zusammenwirken mit einer Anweisungsliste 9, mittels der beispielsweise aus den Werten der Datenstrukturinstanzelemente 6.1 der ersten Datenstrukturinstanz 6 die Werte der Datenstrukturinstanzelemente der zweiten Datenstrukturinstanz 8 berechnet werden. Der zweite Datenblock 2 wird anschließend aus der zweiten Datenstrukturinstanz 8 unter Verwendung eines Datenformatmusters 7 erzeugt. Ferner kann in der Anweisungsliste 9 festgelegt werden, aus welcher Eingangsdatei oder welcher Eingangsschnittstelle der erste Datenblock1 einzulesen ist oder in welche Ausgangsdatei der zweite Datenblock 2 geschrieben werden soll bzw. an welcher Ausgangsschnittstelle der zweite Datenblock 2 auszugeben ist.

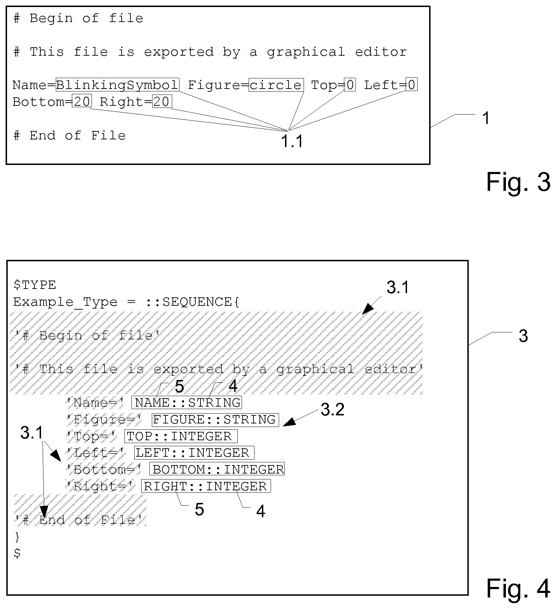

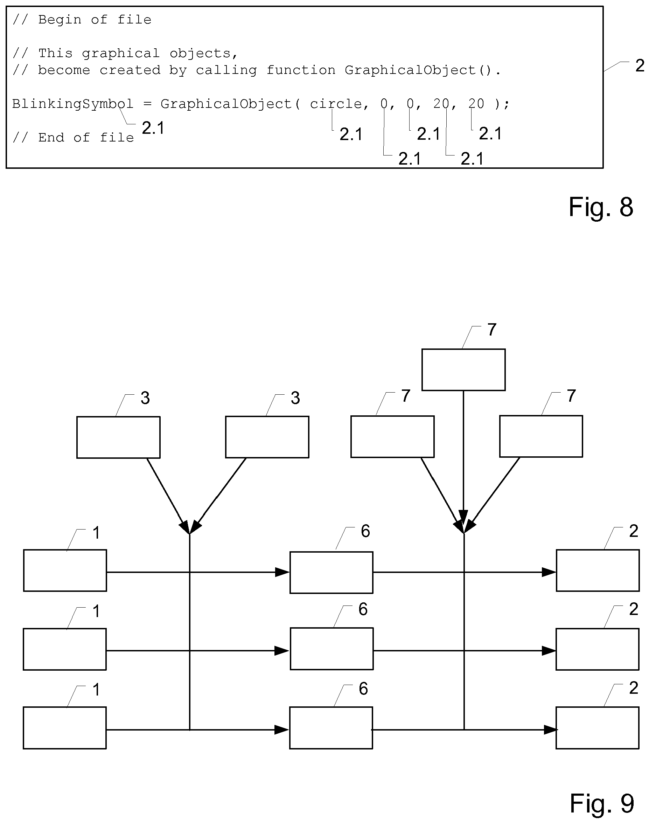

Im Folgenden soll anhand der Figuren 3 bis 8 das erfindungsgemäße Verfahren anhand eines grundlegenden Beispiels veranschaulicht werden, bei dem ein in Figur 3 gezeigter erster Datenblock 1 in einen in Figur 8 gezeigten, zweiten Datenblock 2 umgewandelt wird.

In Figur 4 ist ein Ausführungsbeispiel eines Datenstrukturtypen 3 zu dem in Figur 3 dargestellten ersten Datenblock 1 gezeigt. Durch den Datenstrukturtypen 3 werden feste, Datenstrukturelemente 3.1, die sowohl in Figur 3 als auch in Figur 4 als schraffierte Felder eingezeichnet sind und variable Datenstrukturelemente 3.2 definiert, die in Figuren 3 und 4 durch Umrahmungen hervorgehoben sind.

Mittels des Datenstrukturtypen 3 wird das erste Datenformat des ersten Datenblocks 1 abgebildet, wobei die festen Datenstrukturelemente 3.1 dazu dienen, mittelbar den Ort der variablen Datenstrukturelementen 3.2 im ersten Datenblock 1 zu definieren und diese variablen Datenstrukturelemente 3.2 beim Analysieren des ersten Datenblocks 1 aufzufinden. Beispielsweise beginnt der erste Datenblock 1, wie im Datenstrukturtypen 3 definiert mit einem Block von festen Datenstrukturelementen 3.1 ("# Begin of file ... graphical editor"). Anschließend wird im Datenstrukturtypen 3 definiert, dass ein weiteres, festes Datenstrukturelement 3.1, beispielsweise die Zeichenkette "Name=" folgt. Daran schließt sich ein variables Datenstrukturelement 3.2 an, und zwar im gezeigten Ausführungsbeispiel vom elementaren Datentypen 4 "STRING", d.h. einer Zeichenkette, wobei der Zeichenkette der Elementname 5 "NAME" zugeordnet wird. Damit wird beispielsweise die im ersten Datenblock 1 enthaltene, nach dem festen Datenstrukturelement 3.1 'Name=' folgende Zeichenkette "BlinkingSymbol" in der Datenstrukturinstanz 6 dem variablen Datenstrukturelement "NAME" 5 als konkreter Wert zugeordnet.

Im gezeigten Ausführungsbeispiel werden im ersten Datenblock 1 weitere Werte für variable Datenstrukturelemente 3.2 durch den ersten Datenstrukturtypen 3 definiert und zwar beispielsweise das Datenstrukturelement mit Namen 5 'FIGURE' und elementaren Datentyp "STRING" dem in der Datenstrukturinstanz 6 die Zeichenkette "circle" als Wert zugewiesen wird, sowie das Datenstrukturelement mit Namen 5 ,TOP' und elementaren Datentyp "INTEGER", dem in der Datenstrukturinstanz 6 die Zahl "0" als Wert zugewiesen wird usw..

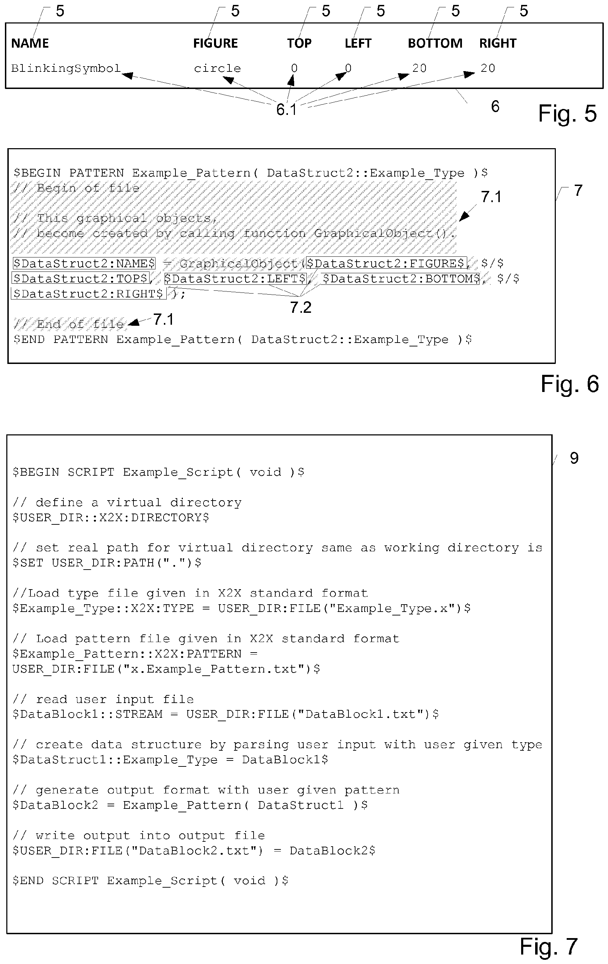

Beim Analysieren des ersten Datenblocks 1 unter Verwendung des Datenstrukturtypen 3 wird die in Figur 5 gezeigte erste Datenstrukturinstanz 6 gebildet, die im gezeigten Ausführungsbeispiel sechs Datenstrukturinstanzelemente 6.1 aufweist, wobei jedes dieser Datenstrukturinstanzelemente 6.1 jeweils einen Elementnamen 5 und einen diesem Elementnamen 5 zugeordneten Wert aufweist. So enthält beispielsweise die erste Datenstrukturinstanz 6 das Datenstrukturinstanzelement 6.1 mit dem Elementnamen 5 "LEFT", dem der Integer-Wert "0" zugeordnet ist. Auf die einzelnen Werte der Datenstrukturinstanzelemente kann über den jeweiligen Elementnamen 5 eindeutig zugegriffen werden.

Der in Figur 8 gezeigte zweite Datenblock 2 wird unter Verwendung des in Figur 6 gezeigten Datenformatmusters 7 und unter Verwendung der ersten Datenstrukturinstanz 6 (Figur 5) erzeugt. Das Datenformatmuster 7 (Figur 6) definiert feste, durch Schraffierungen gekennzeichnete Datenformatelemente 7.1 und variable, durch Umrahmungen gekennzeichnete Datenformatelemente 7.2, wobei den variablen Datenformatelementen 7.2 unter Verwendung einer Datenstrukturinstanz, beispielsweise der ersten Datenstrukturinstanz 6 (Figur 5) über den Elementnamen 5 Werte zugewiesen werden. Das Datenformatmuster 7 legt hierbei über die festen und variablen Datenformatelemente 7.1, 7.2 das zweite Datenformat des zweiten Datenblocks 2 fest. Den variablen Datenformatelementen 7.2 werden Werte aus der ersten Datenstrukturinstanz 6 oder einer davon abgeleiteten zweiten Datenstrukturinstanz 8 zugeordnet, wobei die Wertezuweisung über den Elementnamen 5 eines Datenstrukturinstanzelements 6.1 erfolgt. So wird beispielsweise dem in Figur 6 gezeigten Datenformatmuster 7 eine erste Datenstrukturinstanz 6 des Datenstrukturtypen "Example_Type" übergeben, wobei dieser Datenstrukturinstanz 6 der Name "DataStruct2" zugeordnet wird. Innerhalb des Datenformatmusters 7 erfolgt anschließend die Belegung der variablen Datenformatelemente 7.2 mit Werten durch Verweis auf den Elementnamen 5 des jeweiligen Datenstrukturinstanzelements 6.1 der übergebenen Datenstrukturinstanz 6. Dadurch werden den in Figur 6 durch Umrahmungen gekennzeichneten, variablen Datenformatelementen 7.2 Werte der ersten Datenstrukturinstanz 6 oder einer davon abgeleiteten, zweiten Datenstrukturinstanz 8 zugewiesen.

Figur 7 zeigt eine Anweisungsliste 9, in der Anweisungen zur Umsetzung des ersten Datenblocks 1 in den zweiten Datenblock 2 enthalten sind. Nach einer Dateiverzeichnispfadfestlegung wird zunächst der Datenstrukturtyp 3 "Example_Type" und das Datenformatmuster 7 "Example_Pattern" geladen. Anschließend wird der erste Datenblock 1 eingelesen und daraus die erste Datenstrukturinstanz 6 "DataStruct1" durch Analysieren des ersten Datenblocks 1 erzeugt. Anschließend wird der zweite Datenblock 2 erzeugt, und zwar gemäß dem im Datenformatmuster 7 definierten zweiten Datenformat, wobei dazu die erste Datenstrukturinstanz 6 'DataStruct1' verwendet wird und, wie zuvor beschrieben, die variablen Datenformatelemente 7.2 mit Werten aus der ersten Datenstrukturinstanz 6 befüllt werden. Zuletzt erfolgt die Ausgabe des zweiten Datenblocks 2, und zwar im gezeigten Ausführungsbeispiel in eine Textdatei 'DataBlock2.txt', deren abschließender Inhalt in Figur 8 dargestellt ist.

In Figur 9 ist ein weiteres Ausführungsbeispiel des erfindungsgemäßen Verfahrens gezeigt, bei dem mehrere erste Datenblöcke 1 in mehrere zweite Datenblöcke 2 umgewandelt werden. Im gezeigten Ausführungsbeispiel werden drei erste Datenblöcke 1 eingelesen und zwar vorzugsweise parallel. Zwei dieser ersten Datenblöcke 1 weisen dabei dasselbe Datenformat auf und werden durch einen einzigen Datenstrukturtypen 3 beschrieben. Der weitere erste Datenblock 1 wird durch einen weiteren Datenstrukturtyp 3 beschrieben, sodass lediglich zwei Datenstrukturtypen 3 bei der Umwandlung der ersten Datenblöcke 1 in die zweiten Datenblöcke 2 Verwendung finden. Anschließend werden die ersten Datenblöcke 1 mittels der ihnen zugeordneten Datenstrukturtypen 3 analysiert und die mittels des Datenstrukturtypen 3 ermittelten Werte der variablen Datenstrukturelemente 3.2 in den ersten Datenstrukturinstanzen 6 abgelegt. Hierbei ist jedem ersten Datenblock 1 eine derartige Datenstrukturinstanz 6 zugeordnet. Anschließend werden unter Verwendung von drei Datenformatmustern 7 die drei zweiten Datenblöcke 2 generiert, wobei diese Datenblöcke 2 jeweils unterschiedliche zweite Datenformate aufweisen. Diese zweiten Datenformate werden in den jeweiligen Datenformatmustern 7 beschrieben und durch Zugriff auf die Werte der Datenstrukturinstanzelemente 6.1 der jeweiligen ersten Datenstrukturinstanzen 6 generiert. Somit können parallel mehrere erste Datenblöcke 1 in mehrere zweite Datenblöcke 2 umgesetzt werden, wobei in Abhängigkeit der Anzahl der unterschiedlichen ersten bzw. zweiten Datenformate die Anzahl der Datenstrukturtypen 3 bzw. der Datenformatmuster 7 variiert. Dabei ist jeder Datenstrukturinstanz 6 genau ein korrespondierender Datenstrukturtyp 3 zugeordnet, wobei mehreren Datenstrukturinstanzen 6 der gleiche Datenstrukturtyp 3 zugeordnet sein kann, und zwar dann, wenn mehrere parallel zu verarbeitende erste Datenblöcke 1 ein identisches erstes Datenformat aufweisen und dadurch durch einen identischen Datenstrukturtypen 3 abgebildet werden können. Ebenso ist jedem zweiten Datenblock 2 genau ein korrespondierendes Datenformatmuster 7 zugeordnet, das quasi als Bildungsvorschrift für das zweite Datenformat des zweiten Datenblocks 2 dient. Wie zuvor dargelegt, kann ein einziges Datenformatmuster 7 zur Erzeugung mehrerer zweiter Datenblöcke 2 dienen, wenn das zweite Datenformat dieser zweiten Datenblöcke 2 identisch ist.

Die variablen Datenstrukturelemente 3.2 können, wie beispielsweise in Figur 4 gezeigt elementare Datentypen, die aus herkömmlichen Programmiersprachen hinlänglich bekannt sind, beispielsweise ganze Zahlen (INTEGER), natürliche Zahlen (NATURAL), Zeichenketten (STRING), boolesche Werte (BOOL) etc. sein. Jedoch können die variablen Datenstrukturelemente 3.2 auch eine komplexere Struktur bzw. einen komplexeren Aufbau aufweisen, der durch reguläre Datentypen oder komplexe Datenstrukturtypen beschrieben werden kann. Ein regulärer Datentyp wird hierbei über einen regulären Ausdruck beschrieben, der als Filterkriterium bei der Analyse des ersten Datenblocks 1 dient. Dabei wird ein Bereich des ersten Datenblocks 1 mit dem regulären Ausdruck geprüft und bei Auffinden einer zum regulären Ausdruck passenden Zeichenkette diese dem Datenstrukturelement als Wert zugewiesen. So kann beispielsweise ein erster Datenblock 1 nach fünf Ziffern aufweisenden Zahlen durchsucht werden, wobei der Zahlenwert selbst zunächst keine Bedeutung hat. Derartige fünfziffrige Zahlen können beispielsweise Postleitzahlen sein. Diese im ersten Datenblock 1 gefundene, fünfziffrige Zahl wird anschließend beispielsweise einem Datenstrukturelement 3.2 mit Namen 5 "PLZ" in der ersten Datenstrukturinstanz als Wert zugewiesen.

Zudem kann der Datentyp 4, der einem variablen Datenstrukturelement 3.2 zugeordnet ist, ein komplexer Datenstrukturtyp sein. Den komplexen Datenstrukturtypen ist jeweils eine Strukturkategorie SK zugeordnet. Derartige vordefinierte Strukturkategorien SK sind beispielsweise die Strukturkategorien SEQUENCE, STREAM, LIST, OPTION, PERMUTATION, CHOICE etc.. Der jeweiligen Strukturkategorie SK werden zumindest ein festes oder ein variables Datenstrukturelement 3.1, 3.2 oder eine Anordnung aus festen und/oder variablen Datenstrukturelementen 3.1, 3.2 als Strukturparameter SP übergeben,. Die als Strukturparameter SP übergebenen variablen Datenstrukturelemente 3.2 sind entweder von einem elementaren Datentyp, einem regulären Datentyp oder einem komplexen Datenstrukturtypen. Über die Strukturkategorie SK wird dabei festgelegt, wie als übergebene Strukturparameter zur Analyse des ersten Datenblocks 1 und Erzeugung zumindest eines Datenstrukturinstanzelements 6.1 verwendet werden. Die Strukturkategorie SK gibt damit ein Kriterium vor, auf welche Art und Weise, in welcher Anordnung bzw. in welcher Reihenfolge die übergebenen Strukturparameter SP im Datenblock 1 vorkommen.

Nachfolgend werden unterschiedliche, vordefinierte Strukturkategorien SK anhand der Figuren 3 - 38 näher erläutert:
Der gemäß Figur 4 definierte Datenstrukturtyp 3verwendet die Strukturkategorie SK SEQUENCE. Dieser Strukturkategorie SK werden in geschweiften Klammern als Strukturparameter SP eine Anordnung von festen und variablen Datenstrukturelementen 3.1, 3.2 übergeben, und zwar die mit Apostroph geklammerten festen Datenstrukturelemente '#Begin of file,'...,'#End of file'. Über die Strukturkategorie SK SEQUENCE wird definiert, dass in dem eingelesenen ersten Datenblock 1 die als Strukturparameter SP übergebenen festen und variablen Datenstrukturelemente 3.1, 3.2 exakt in dieser Form und dieser Anordnung im ersten Datenblock 1 enthalten sein müssen. Durch die Strukturkategorie SK SEQUENCE kann damit ein erster Datenblock 1 nach einer sequentiellen Anordnung aus festen und variablen Datenstrukturelementen 3.1, 3.2 durchsucht werden.

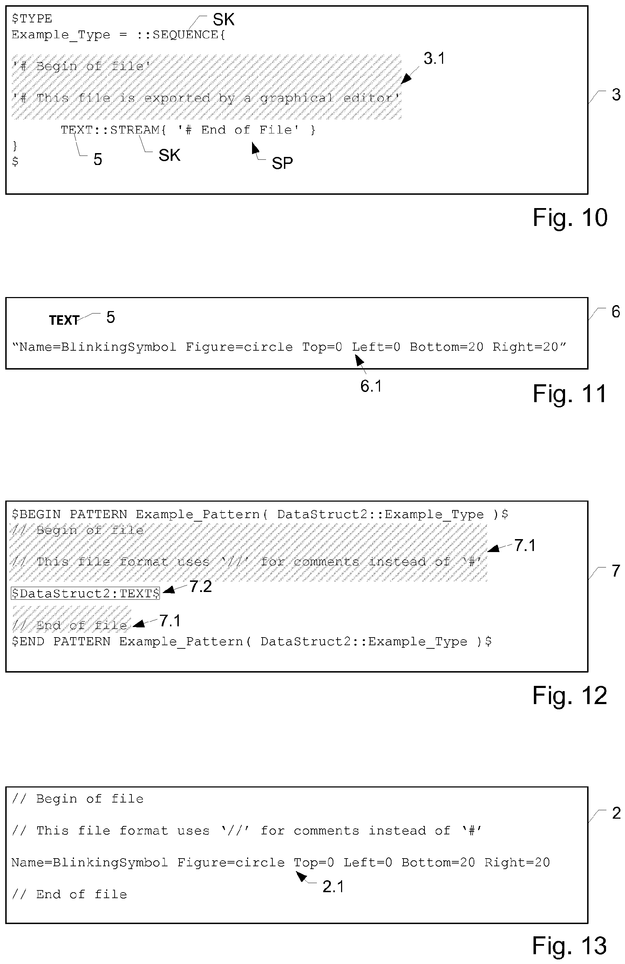

Im Folgenden soll anhand der Figuren 10 - 13 die Verwendung der Strukturkategorie SK STREAM beschrieben werden. Dieser wird, wie in Figur 10 gezeigt, das feste Datenstrukturelement '#End of file' als Strukturparameter SP übergeben.. Die Strukturkategorie SK STREAM legt fest, dass beim Analysieren des ersten Datenblocks 1 ab der aktuellen Leseposition sämtliche Zeichen bis zum erstmaligen Auftreten des festen Datenstrukturelement '#End of file' eingelesen und die Zeichenkette ab der aktuellen Lesesposition bis zum Begin der Zeichenkette '#End of file' dem variablen Datenstrukturelement ,TEXT' als Wert zugewiesen wird. Dabei ist die aktuelle Leseposition stets durch das erste Zeichen nach dem zuletzt gelesenen gültigen Datenstrukturelement bestimmt.
Im gezeigten Ausführungsbeispiel wird die Anweisungsliste gemäß Fig. 7 verwendet und dabei der in Figur 3 gezeigte erste Datenblock 1 unter Verwendung des Datenstrukturtypen aus Figur 10 gelesen, wobei das vor dem variablen Datenstrukturelement 3.2 'TEXT' mit Strukturkategorie SK STREAM stehende feste Datenstrukturelement 3.1 ('#This file is exported by a graphical editor') die aktuelle Leseposition auf das erste nachfolgende Zeichen setzt und damit den Anfang für den Wert des nachfolgend zu lesenden Datenstrukturelements festlegt. Das als Strukturparameter SP übergebene feste Datenstrukturelement 3.1 ('#End of file') dagegen definiert das Ende des Lesens. Somit wird durch den STREAM-Befehl der zwischen den genannten festen Datenstrukturelementen 3.1 liegende Bereich des ersten Datenblocks 1 als Wert in der ersten Datenstrukturinstanz 6 dem variablen Datenstrukturelement mit Namen 5 ("TEXT") zugewiesen (Figur 11).

Anschließend wird der in Figur 13 gezeigte Datenblock 2 unter Verwendung des Datenformatmusters 7 (Fig. 12) und der in Figur 7 gezeigten Anweisungsliste 9 erzeugt, wobei die in der ersten Datenstrukturinstanz 6 abgelegten Datenstrukturinstanzelemente Verwendung finden.. Beispielsweise wird über das Datenformatelement $DataStruct2:TEXT$ auf den Wert des Datenstrukturelements mit dem Namen 5 "TEXT" der ersten Datenstrukturinstanz 6 zugegriffen. Dieser Wert ist eine Zeichenkette, die an der entsprechenden Stelle im zweiten Datenblock 2 eingefügt wird. Über die Strukturkategorie SK STREAM ist es damit möglich, bestimmte, zwischen Datenstrukturelementen liegende Bereiche des Datenblocks herauszugreifen und variablen Datenstrukturinstanzelementen der ersten Datenstrukturinstanz 6 als Wert zuzuweisen.

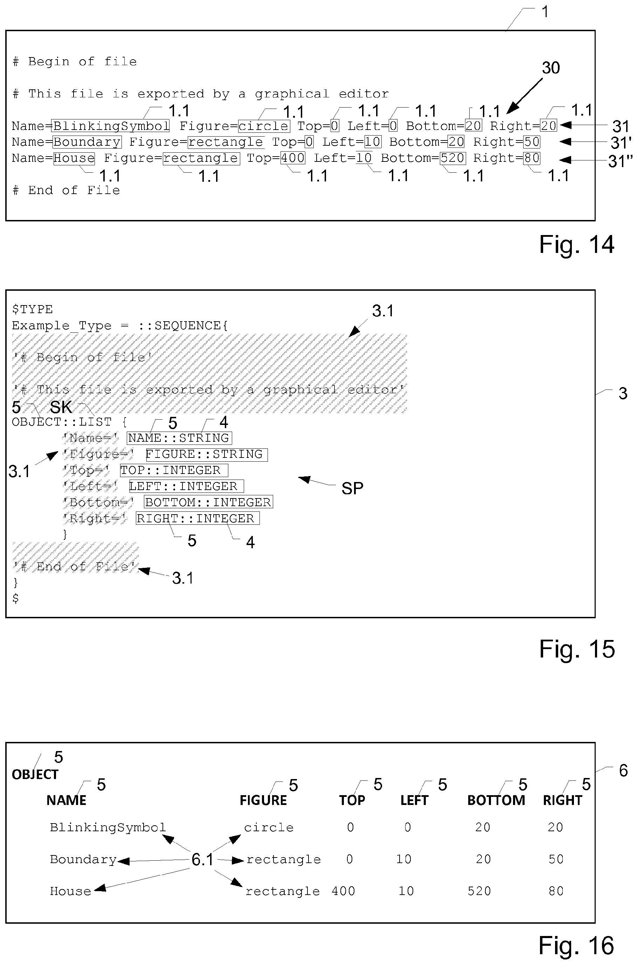

Nachfolgend soll anhand der Figuren 14 - 18 die Verwendung der Strukturkategorie SK LIST zur Abarbeitung von Listen mit einer definierten Listenstruktur beschrieben werden.

In Figur 14 ist der einzulesende erste Datenblock 1 gezeigt. Dieser enthält im Mittelteil eine Liste 30 bestehend aus mehreren Listenelementen 31, 31', 31". Die einzelnen Listenelemente 31, 31', 31" enthalten jeweils mehrere Listenunterelemente, die anschließend weiter verwendet werden sollen. Dieser erste Datenblock 1 wird mittels des Datenstrukturtypen 3 gemäß Figur 15 analysiert. Der Datenstrukturtyp 3 verwendet hierbei die Strukturkategorie SK LIST, wobei dieser als Strukturparameter SP der strukturelle Aufbau der Listenelemente 31, 31', 31" übergeben wird, wobei jeweils die nach den festen Datenstrukturelementen 3.1 folgenden variablen Datenstrukturelemente 3.2 aus einem Datentyp 4 und einem Namen 5 bestehen. Beim Analysieren des ersten Datenblocks 1 anhand des Datenstrukturtypen 3 wird mittels der Strukturkategorie SK "LIST" nach einer Liste von Elementen gesucht, die die durch die Strukturparameter SP definierte Form aufweisen. Dabei wird eine in Figur 16 gezeigte erste Datenstrukturinstanz 6 erzeugt, die ebenfalls listenförmig ist und die beim Analysieren ermittelten Werte der variablen Datenstrukturelemente 3.2 des ersten Datenblocks 1 aufzeigt. Der wesentliche Aspekt der Strukturkategorie LIST besteht dabei darin, dass die Länge der einzulesenden Liste 30 nicht definiert sein muss. Dies ist ein wesentlicher Unterschied zu herkömmlichen Programmiersprachen und den darin verwendeten sogenannten Array-Befehl. Die einzulesende Liste 30 kann eine beliebige, zuvor nicht festzulegende Länge aufweisen, wobei jeweils beim Auffinden eines neuen Listenelements 31, 31', 31" der benötigte Speicherplatz allokiert wird.

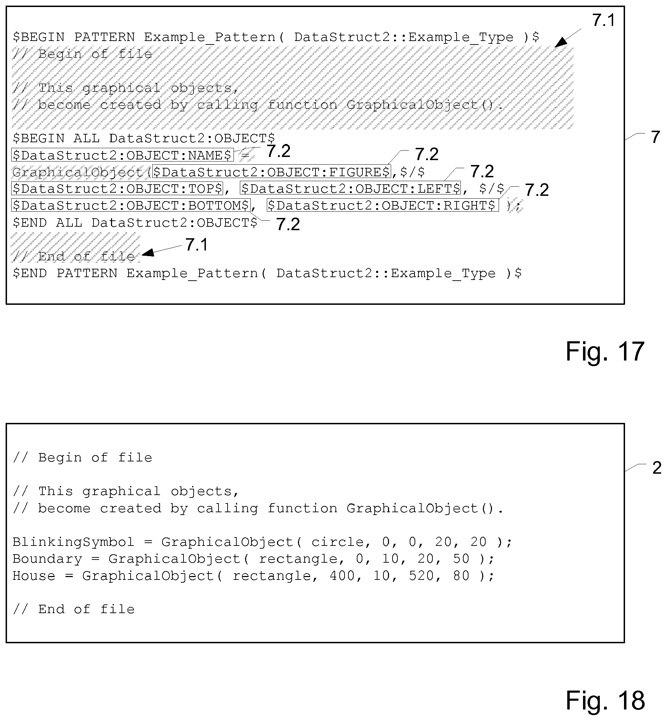

Die Umsetzung des ersten Datenblocks 1 in den zweiten Datenblock 2 (Figur 18) erfolgt mittels dem in Figur 17 gezeigten Datenformatmuster 7 sowie der in Figur 7 gezeigten Anweisungsliste 9. Der Zugriff auf die einzelnen Werte der ersten Datenstrukturinstanz 6 erfolgt jeweils über eine Verkettung der Namen der Datenstrukturelemente zu einer eindeutigen ID, beispielsweise $DataStruct2:OBJECT:NAME$, wobei "DataStruct2" die übergebene Datenstrukturinstanz, "OBJECT" der Name der Gesamtliste und "NAME" der Name des ersten Datenstrukturelements darin ist. Wie in Figur 17 gezeigt, findet in dem Datenformatmuster 7 ein sogenannter BEGIN-ALL-Befehl Verwendung, wobei durch diesen Befehl nacheinander sämtliche Zeilen der Liste abgearbeitet werden. Damit wird der zweite Datenblock 2 mit den entsprechenden Werten der Datenstrukturinstanzelemente 6.1 gefüllt.

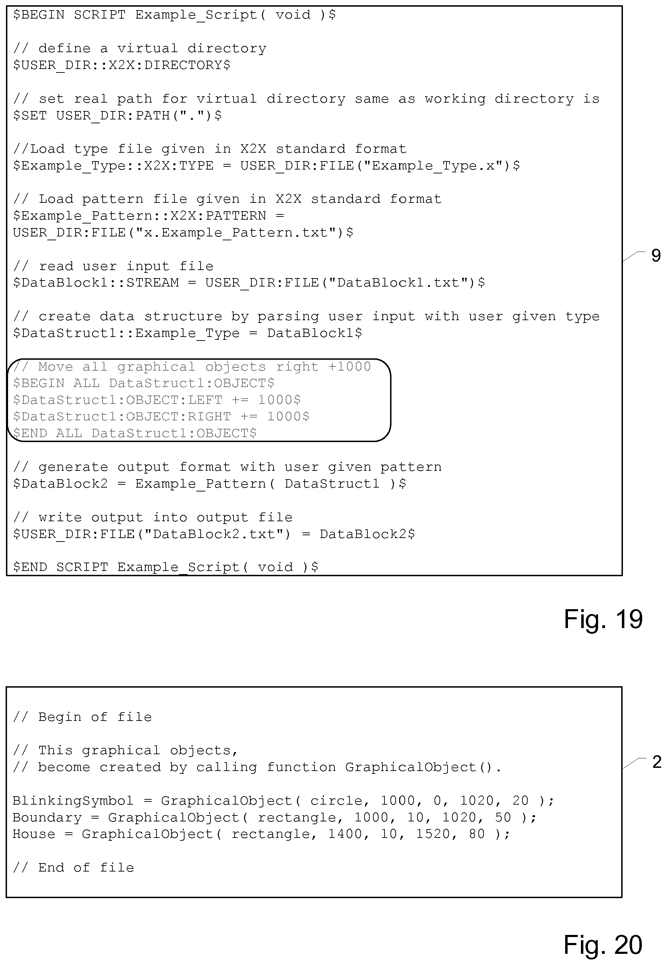

Das Ausführungsbeispiel gemäß Figur 19 und 20 greift das zuvor beschriebene Ausführungsbeispiel auf und verwendet insbesondere den in Figur 14 dargestellten ersten Datenblock 1, das in Figur 15 dargestellte Datenstrukturmuster 3 und die in Figur 16 dargestellte erste Datenstrukturinstanz 6. Der wesentliche Unterschied zu dem zuvor beschriebenen Ausführungsbeispiel besteht darin, dass die Anweisungsliste 9 den durch die Umrahmung gekennzeichneten Befehlsblock 40 enthält, der eine Veränderung der in der ersten Datenstrukturinstanz 6 beinhalteten Werte hervorruft. Somit kann innerhalb der Anweisungsliste 9 durch Operationen, insbesondere arithmetische Operationen ein Wert eines Datenstrukturinstanzelements 6.1 verändert werden, sodass nicht nur eine Umsetzung des Formats des ersten Datenblocks 1 in das Format des zweiten Datenblocks 2 erfolgt, sondern gleichzeitig eine Veränderung der Werte von Datenstrukturinstanzelementen 6.1. Wie in Figur 20 im Vergleich zu Figur 18 ersichtlich, wird im gezeigten Ausführungsbeispiel durch die arithmetische Operation eine Wertveränderung an der Position eines graphischen Objekts durch Addition des Wertes 1000 vorgenommen.

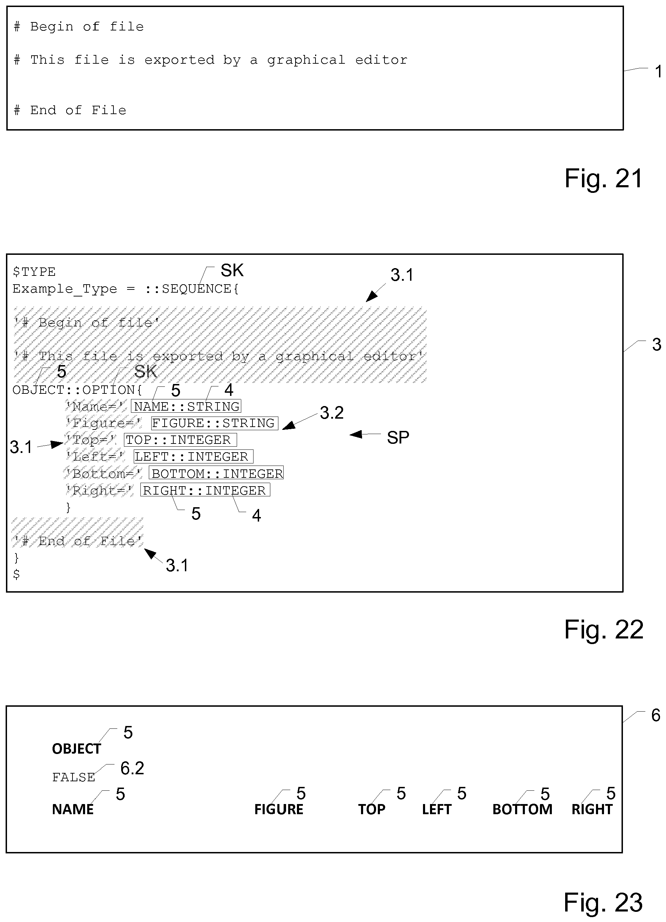

Das Ausführungsbeispiel der Figuren 21 - 25 dient der Erklärung der Strukturkategorie SK OPTION. Die Strukturkategorie SK OPTION dient zur Feststellung, ob die als Strukturparameter SP übergebenen Datenstrukturelemente 3.1, 3.2 an der Leseposition im ersten Datenblock 1 nacheinander in genau der angegebenen Reihenfolge im vorkommen oder nicht. In dem in Figur 22 gezeigten Datenstrukturtyp 3 ist die Strukturkategorie SK OPTION enthalten, der mehrere Datenstrukturelemente 3.1, 3.2 als Strukturparameter SP übergeben werden. Der Strukturkategorieaufruf ist zwischen zwei festen Datenstrukturelementen 3.1 angeordnet, und zwar zwischen '#This file is exported by a graphical editor' und '#End of file'.

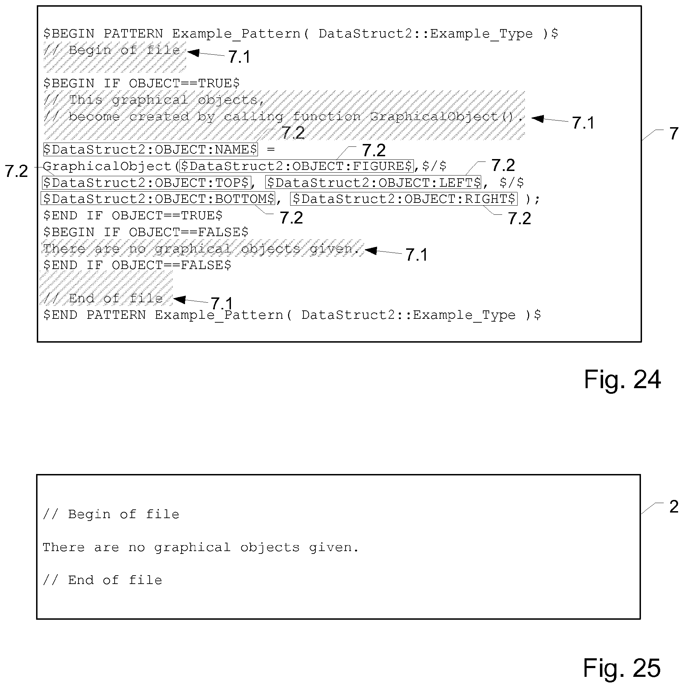

Beim Analysieren des ersten Datenblocks (Figur 21) wird festgestellt, ob an der Leseposition, die als Strukturparameter SP übergebenen Datenstrukturelemente 3.1, 3.2 nacheinander und in genau der angegebenen Reihenfolge im ersten Datenblock 1 vorkommen. Da der in Figur 21 gezeigte erste Datenblock 1 nicht die als Strukturparameter SP übergebenen Datenstrukturelemente 3.1, 3.2 aufweist, wird in der ersten Datenstrukturinstanz 6 über eine Marke 6.2 (FALSE) festgehalten, dass die über die Strukturkategorie SK "OPTION" definierte Anordnung von Datenstrukturelementen 3.1, 3.2 im ersten Datenblock 1 an der Leseposition nicht vorhanden war. Die Generierung des zweiten Datenblocks 2 erfolgt unter Verwendung des Datenformatmusters 7 (Fig. 24) sowie der Anweisungsliste 9 gemäß Figur 7. In dem Datenformatmuster 7 (Fig. 24) wird über eine sogenannte IF-Abfrage überprüft, ob die in der ersten Datenstruktur 6 enthaltene Marke 6.2 den Wert "TRUE" oder "FALSE" aufweist. Abhängig vom Wert der Marke 6.2 werden die durch die IF-Abfrage geklammerten Ausgaben beim zweiten Datenblock erzeugt oder eben nicht erzeugt. Im gezeigten Ausführungsbeispiel ist der Wert der Marke 6.2 "FALSE", sodass die Ausgabe "There are no graphical objects given." generiert wird.

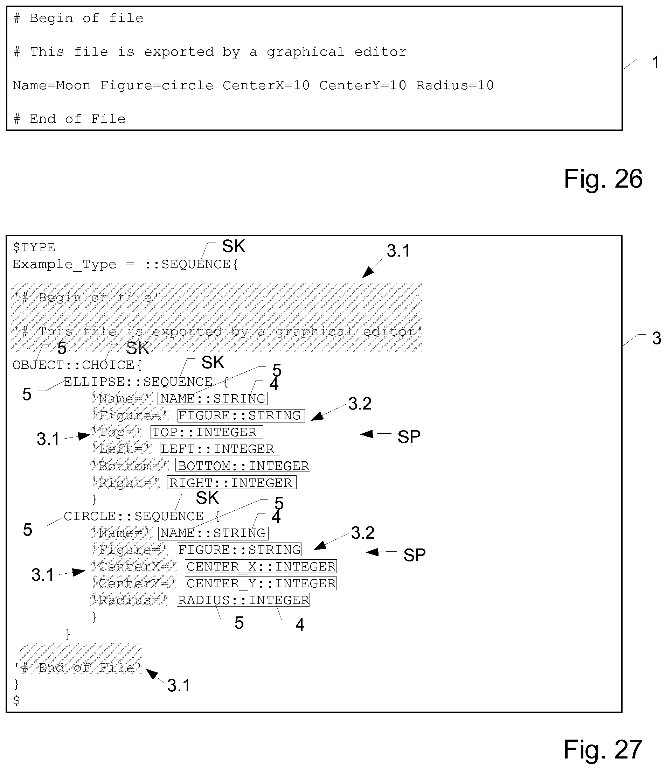

Figuren 26 - 30 dienen der Erläuterung der Strukturkategorie SK "CHOICE". Der CHOICE-Befehl dient dazu, festzustellen, welches der als Strukturparameter SP übergebenen Datenstrukturelemente 3.1, 3.2 im zu analysierenden ersten Datenblock 1 vorkommen. Im in Figur 27 gezeigten Datenstrukturtypen 3 ist wiederum zwischen den festen Datenstrukturelementen 3.1 '#This file is exported by a graphical editor' und '#End of file' eine derartige CHOICE-Anweisung verwendet, wobei als Strukturparameter SP zwei SEQUENCE-Anweisungen übergeben werden, die selbst wiederum eine Vielzahl von Strukturparametern SP enthalten, die aus festen und variablen Datenstrukturelementen 3.1, 3.2 bestehen. Mittels der CHOICE-Anweisung wird dabei abgefragt, ob das mit dem Namen "ELLIPSE" bezeichnete Datenstrukturelement oder das mit dem Namen "CIRCLE" bezeichnete Datenstrukturelement im ersten Datenblock 1 vorkommt, und zwar an der Leseposition, die durch die Position des CHOICE-Befehls definiert wird. Wie anhand des ersten Datenblocks 1 gemäß Figur 26 ersichtlich enthält dieser Datenblock an eben dieser Leseposition einen Datenblockabschnitt mit einer Struktur, die der mit dem Namen 5 "CIRCLE" bezeichneten Struktur aus festen und variablen Datenstrukturelementen 3.1, 3.2 gleicht. Die aus dem Analysieren des ersten Datenblocks 1 anhand des Datenstrukturtypen 3 generierte erste Datenstrukturinstanz 6 enthält zum Namen "ELLIPSE" die boolesche Variable "FALSE" und zum Namen,, CIRCLE die boolesche Variable "TRUE", da eben diese im ersten Datenblock ermittelt wurde. Zudem enthält die erste Datenstrukturinstanz 6 mehrere Datenstrukturinstanzelemente 6.1, die den in dem entsprechenden SEQUENCE-Befehl als Strukturparameter SP übergebenen variablen Datenstrukturelementen 3.2 bestehend aus Namen 5 und Datentyp 4 entsprechen.

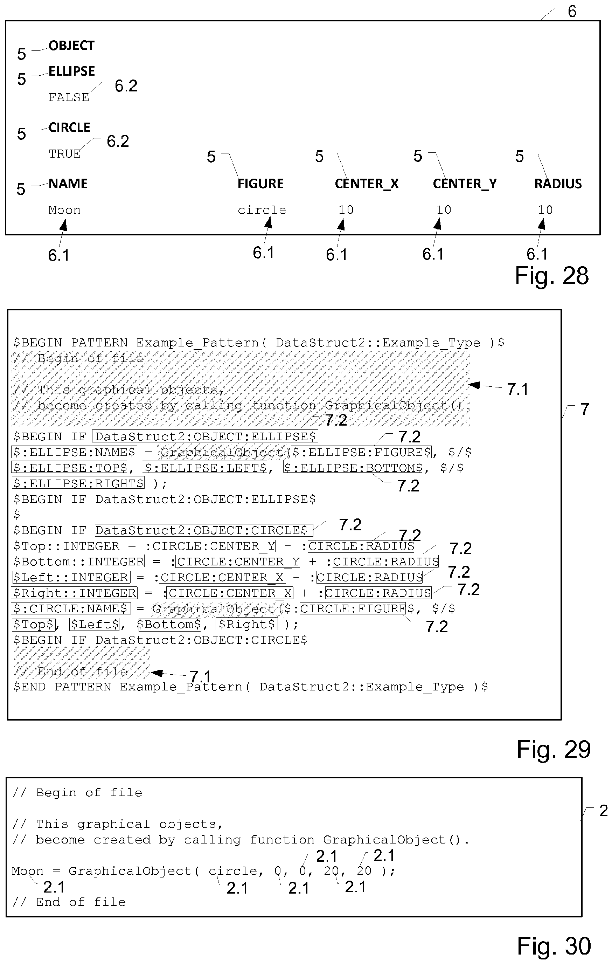

Die Generierung des zweiten Datenblocks 2 (Figur 30) aus der ersten Datenstrukturinstanz 6 erfolgt mittels dem in Figur 29 gezeigten Datenformatmuster 7. Abweichend von den zuvor beschriebenen Ausführungsbeispielen erfolgt hier eine Umrechnung der in der ersten Datenstrukturinstanz 6 enthaltenen Werte der Datenstrukturinstanzelemente 6.1, und zwar unter Verwendung von Werten von Datenstrukturinstanzelementen 6.1 und damit verbundener arithmetischer Operationen. So z.B. wird von dem über die Namenskette CIRCLE:CENTER_Y definierten Wert der über die Namenskette CIRCLE:RADIUS definierte Wert abgezogen wird und damit der daraus entstehende Wert beispielsweise einem neuen Datenstrukturinstanzelement mit einem eindeutigen Namen 5, hier TOP, zugeordnet. Ein weiterer Unterschied des hier gezeigten Datenformatmusters 7 besteht darin, dass dieses Datenformatmuster 7 Bedingungsbefehle (IF-Befehle) enthält, mittels denen die in der ersten Datenstrukturinstanz 6 enthaltenen booleschen Variablen abgefragt werden. Dadurch ist es möglich, abhängig von der durch die Strukturkategorie SK CHOICE im ersten Datenblock 1 ermittelten Datenblockbereiche entsprechende Ausgaben im zweiten Datenblock 2 zu erzeugen.

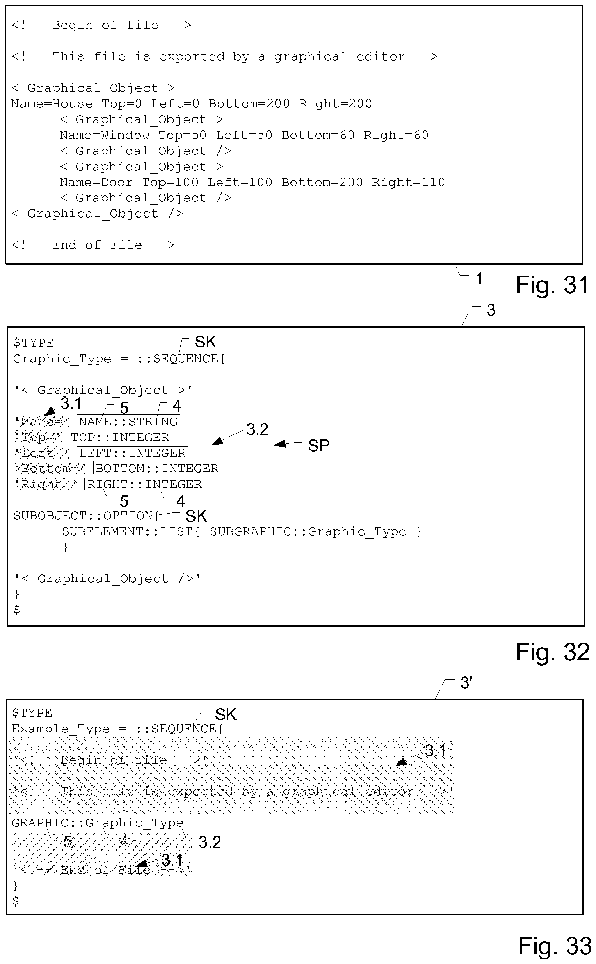

Figuren 31 - 38 zeigen ein Ausführungsbeispiel, das zwei Datenstrukturtypen 3, 3' zur Abbildung des ersten Datenformats des ersten Datenblocks 1 verwendet. Der Datenstrukturtyp 3', Example_Type (Fig. 33) referenziert hierbei auf den Datenstrukturtypen 3, Graphic_Type, (Fig. 32). Im Datenstrukturtypen 3, Graphic_Type, (Fig. 32) erfolgt eine rekursive Referenzierung dieses Datenstrukturtypen 3 in sich selbst. Der als "Graphic_Type" bezeichnete Datenstrukturtyp 3 ruft hierbei in dem Strukturkategoriebefehl LIST {SUBGRAPHIC::Graphic_Type} diesen Datenstrukturtypen 3 erneut auf, und zwar solange, wie die durch die Strukturkategorie SK SEQUENCE bzw. deren übergebene Strukturparameter SP im ersten Datenblock 1 (Figur 31) vorkommen. Dieser Aufruf eines Datenstrukturtypen 3 aus sich selbst heraus ist jedoch lediglich bei Strukturkategorien SK möglich, die einen endlichen Selbstaufruf mit einem eindeutigen Abbruchskriterium bewirken, d.h. solchen, die keine unendliche Schleife generieren. Dies ist insbesondere die Strukturkategorie LIST oder OPTION.

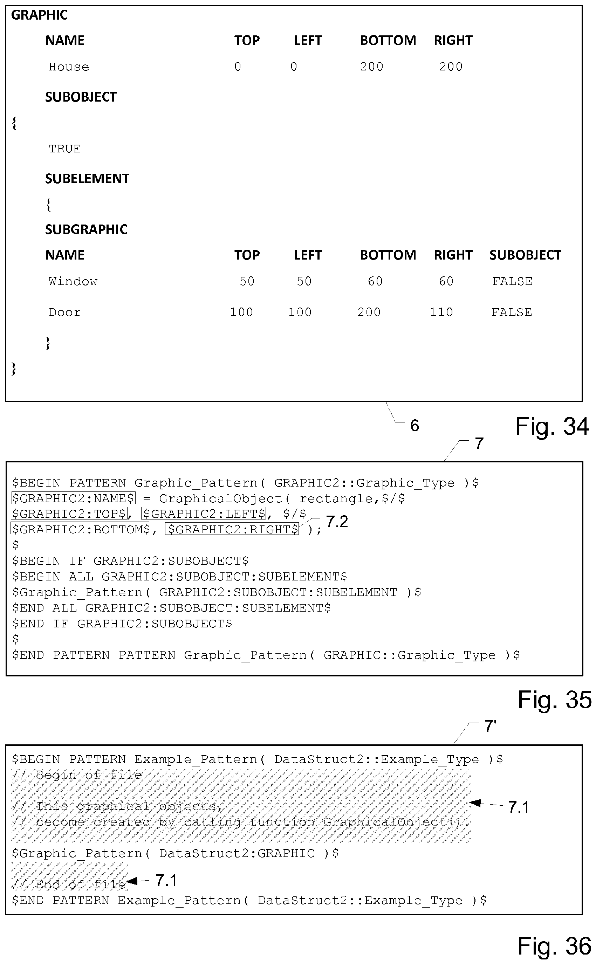

In Figur 34 ist die erste Datenstrukturinstanz 6 gezeigt, die beim Einlesen des ersten Datenblocks 1 (Figur 31) unter Verwendung der Datenstrukturtypen 3, 3' gemäß Figuren 32 und 33 generiert wird. Die erste Datenstrukturinstanz 6 weist im gezeigten Ausführungsbeispiel mehrere Hierarchiestufen auf, und zwar die weitere Hierarchiestufe SUBOBJECT und die darunter liegende weitere Hierarchiestufe SUBELEMENT.

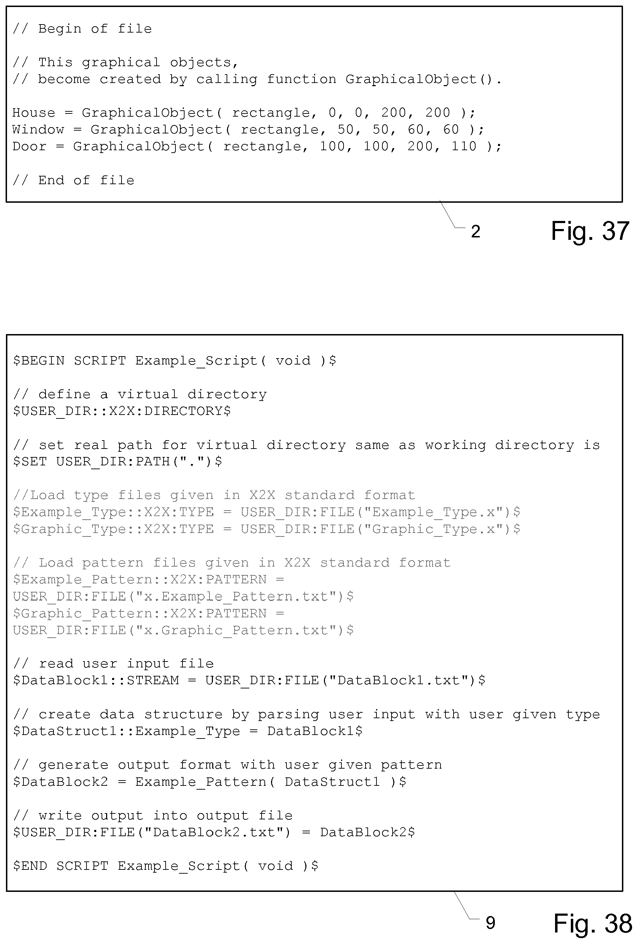

Aus dieser ersten Datenstrukturinstanz 6 wird mittels der beiden Datenformatmuster 7, 7' (Figuren 35, 36) und unter Verwendung der Anweisungsliste 9 gemäß Figur 38 der zweite Datenblock 2 (Figur 37) erzeugt. Aus dem Datenformatmuster 7' heraus wird das weitere Datenformatmuster 7 aufgerufen, wobei auch dieses Datenformatmuster 7 einen rekursiven Selbstaufruf beinhaltet. Dieser rekursive Selbstaufruf erfolgt innerhalb der IF-Abfrage, sodass das Datenformatmuster 7 (Graphic_Pattern) solange aufgerufen wird, wie in der ersten Datenstrukturinstanz 6 Einträge vom Typ SUBELEMENT enthalten sind. Die durch diese IF-Abfrage kontrollierte Schleife ist nicht endlos, da die Datenmenge in einer Datenstrukturinstanz endlich ist.

Eine weitere Besonderheit des erfindungsgemäßen Verfahrens besteht darin, dass Werte der ersten und/oder zweiten Datenstrukturinstanzen 6 über Kurzformen einer Kette von Namen, sogenannten Identifizierungs-Shortcuts angesprochen werden können. Eine derartige Namenskette kann beispielsweise, wie in Figur 35 gezeigt durch GRAPHIC:NAME, oder GRAPHIC:SUBOBJECT:SUBELEMENT:NAME etc. gebildet sein. Solange der letzte Name der Namenskette in der Datenstrukturinstanz 6 eindeutig ist, kann dieser Name zum Zugriff auf den Wert des Datenstrukturinstanzelements 6.1 benutzt werden. Ist der letzte Name der Namenskette aber nicht eindeutig innerhalb der Datenstrukturinstanz 6 ist, so ist es auch möglich, dass Teile der Namenskette also beispielsweise SUBELEMENT:NAME zum Zugriff auf den Wert des Datenstrukturinstanzelements 6.1 verwendet werden. D.h. der Namensraum ist in Namensunterräume aufgeteilt werden und es kann über einen Teil der Namenskette auf bestimmte Werte der Datenstrukturinstanzelemente 6.1 zugegriffen werden, solange dieser Teil der Namenskette in dem Namensunterraum eindeutig ist.

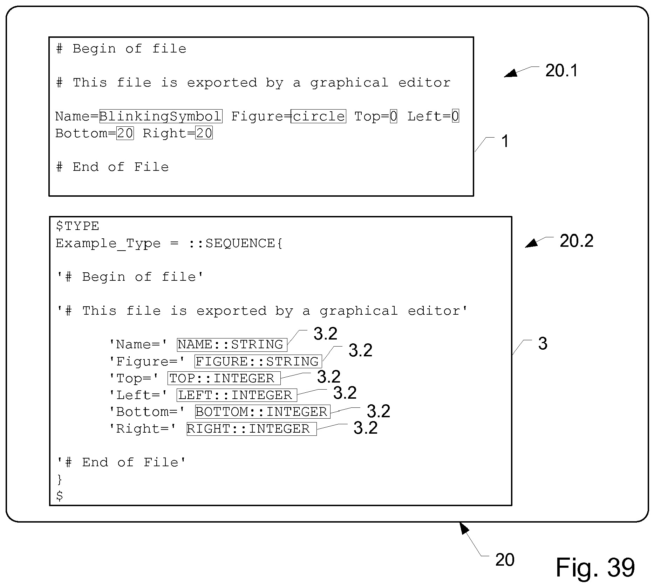

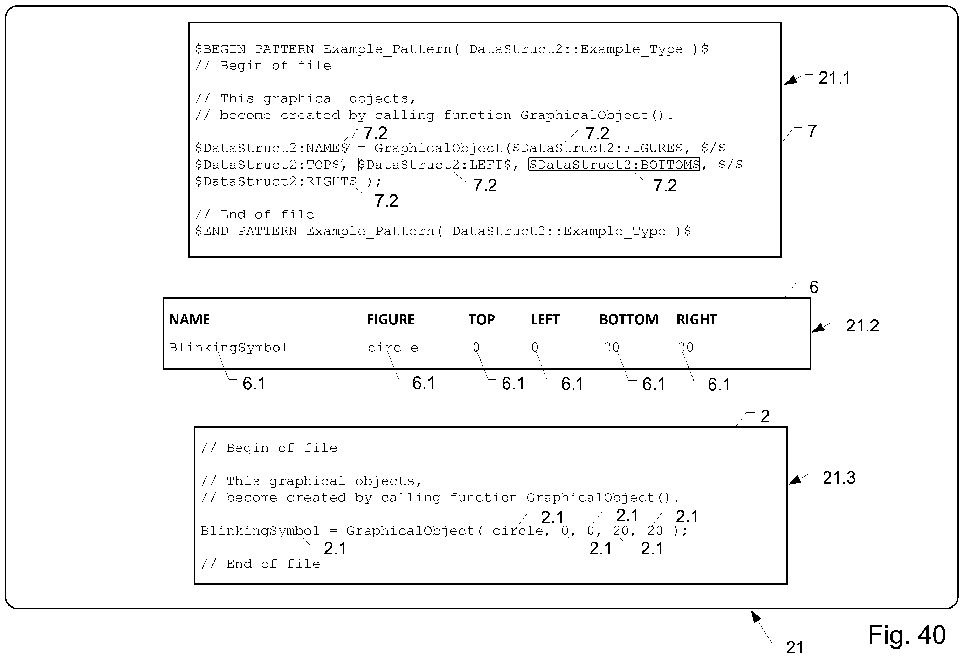

Die Figuren 39 und 40 zeigen jeweils graphische Editoren 20, 21, die zur benutzerfreundlichen Bedienbarkeit des erfindungsgemäßen Verfahrens dienen. In Figur 39 ist ein graphischer Editor 20 zur Erstellung bzw. Veränderung von Datenstrukturtypen 3 gezeigt, wobei in einem ersten Ausgabefenster 20.1 das auf einer graphischen Benutzerschnittstelle, insbesondere einem Monitor angezeigt wird, ein erster Datenblock 1 und in einem zweiten Ausgabefenster 20.2 der zu bearbeitende Datenstrukturtyp 3 dargestellt wird. Zur erleichterten Bearbeitung des Datenstrukturtypen 3 werden die mit den variablen Datenstrukturelementen 3.2 des im zweiten Ausgabefenster 20.2 dargestellten Datenstrukturtyps 3 korrespondierenden variablen Datenblockbereiche 1.1 des ersten Datenblocks 1 im ersten Ausgabefenster 20.1 durch Markierungen graphisch hervorgehoben. Die Markierungen können beispielsweise eine farbige Hinterlegung der variablen Datenblockbereiche 1.1 sein. Vorteilhaft wird mit dem Hervorheben eines ausgewählten variablen Datenstrukturelements 3.2 im zweiten Ausgabefenster 20.2 der damit korrespondierende variable Datenblockbereich 1.1 hervorgehoben. Gleiches gilt auch in umgekehrter Weise für das Auswählen eines variablen Datenblockbereichs 1.1 im ersten Ausgabefenster 20.1. Auch können Veränderungen am ersten Datenblock 1 und/oder an dem Datenstrukturtypen 3 zu einer geänderten Darstellung der Markierungen in den Ausgabefenstern 20.1, 20.2 führen. Dies kann insbesondere bei Veränderungen an Strukturkategorien SK oder Strukturparametern SP dieser Strukturkategorien SK auftreten.

Figur 40 zeigt den graphischen Editor 21 zur Erstellung bzw. Veränderung von Datenformatmustern 7. Dieser graphische Editor 21 weist drei Ausgabefenster 21.1, 21.2, 21.3 auf, wobei im ersten Ausgabefenster 21.1 das zu bearbeitende Datenformatmuster 7, im zweiten Ausgabefenster 21.2 die den variablen Datenformatelementen 7.2 des Datenformatmusters 7 zugeordneten Werte von Datenstrukturinstanzelementen 6.1 und im dritten Ausgabefenster 21.3 der durch das Datenformatmuster 7 erzeugte zweite Datenblock 2 dargestellt wird. Zur benutzerfreundlichen Bearbeitung des Datenformatmusters 7 werden jeweils die variablen Datenformatelemente 7.2 im ersten Ausgabefenster 21.1 und die mit diesen variablen Datenformatelementen 7.2 korrespondierenden Datenblockbereiche 2.1 des zweiten Datenblocks 2 graphisch hervorgehoben. Diese Hervorhebung kann wiederum durch farbige Hinterlegung der entsprechenden Bereiche erfolgen. Ebenso kann gleichzeitig eine Markierung des entsprechenden korrespondierenden Datenstrukturinstanzelements 6.1 der im zweiten Ausgabefenster 21.2 dargestellten ersten Datenstrukturinstanz 6 erfolgen. Ferner sind die graphischen Ausgaben in den jeweiligen Ausgabefenstern derart miteinander verknüpft, dass beispielsweise eine Veränderung eines Werts eines Datenstrukturinstanzelements 6.1 zu einer Veränderung des korrespondierenden Datenblockbereichs 2.1 des zweiten Datenblocks 2 führt. Ebenso können Veränderungen in dem Datenformatmuster 7 zu korrespondierenden Veränderungen im zweiten Datenblock 2 führen.

Die Erfindung wurde voranstehend an einem Ausführungsbeispiel beschrieben. Es versteht sich, dass zahlreiche Modifikationen und Änderungen möglich sind, ohne dass hierdurch der Erfindungsgedanke verlassen wird.

### Bezugszeichenliste

- 1: erster Datenblock
- 1.1: Datenblockbereich
- 2: zweiter Datenblock
- 2.1: Datenblockbereich
- 3, 3': Datenstrukturtyp
- 3.1: feste Datenstrukturelemente
- 3.2: variable Datenstrukturelemente
- 4: Datentyp
- 5: Elementname
- 6: erste Datenstrukturinstanz
- 6.1: Datenstrukturinstanzelement
- 6.2: Marke
- 7, 7': Datenformatmuster
- 7.1: feste Datenformatelemente
- 7.2: variable Datenformatelemente
- 8: zweite Datenstrukturinstanz
- 9: Anweisungsliste
- 20: grafischer Editor
- 21: grafischer Editor
- 30: Liste
- 31, 31', 31": Listenelement
- 40: Befehlsblock

- SK: Strukturkategorie
- SP: Strukturparameter

## Patentansprüche

1. Computerimplementiertes Verfahren zur Umsetzung zumindest eines ersten Datenblocks (1) mit einem ersten Datenformat in zumindest einen zweiten Datenblock (2) mit einem zweiten Datenformat mittels einer Rechnereinheit, die zumindest einen Prozessor und zumindest eine Speichereinheit aufweist, **dadurch gekennzeichnet,**
**dass** der erste Datenblock (1), zumindest ein erster Datenstrukturtyp (3) und zumindest ein Datenformatmuster (7) durch den Prozessor eingelesen wird,
**dass** das erste Datenformat durch den zumindest einen Datenstrukturtypen (3) abgebildet wird, der feste Datenstrukturelemente (3.1), die konstanten Zeichenketten entsprechen, und variable Datenstrukturelemente (3.2), die verschiedene Werte eines Datentypen (4) annehmen können, definiert, dass den variablen Datenstrukturelementen (3.2) des Datenstrukturtypen (3) jeweils ein Datentyp (4) zugewiesen wird und mindestens einem variablen Datenstrukturelement (3.2) auch ein eindeutiger Name (5) zugewiesen wird, dass der erste Datenblock (1) unter Verwendung des Datenstrukturtypen (3) analysiert und die erste Datenstrukturinstanz gebildet wird, dass unter Verwendung der festen Datenstrukturelemente (3.1) und der Datentypen (4) der variablen Datenstrukturelemente (3.2) durch den Prozessor aus dem ersten Datenblock (1) zumindest eine erste Datenstrukturinstanz (6) mit zumindest einem Datenstrukturinstanzelement (6.1) erzeugt wird, wobei durch den Datenstrukturtypen (3) festgelegt ist, welche den variablen Datenstrukturelementen (3.2) des Datenstrukturtypen (3) entsprechende Datenblockbereiche den Datenstrukturinstanzelementen (6.1) der Datenstrukturinstanz (6) als Werte zugewiesen werden sollen, wobei auf den Wert des Datenstrukturinstanzelements (6.1) über den Namen (5) direkt zugegriffen werden kann, wobei die erste Datenstrukturinstanz (6) in der Speichereinheit abgelegt wird,
**dass** der zweite Datenblock (2) aus dem Datenformatmuster (7) unter Verwendung der ersten Datenstrukturinstanz (6) oder zumindest einer aus der ersten Datenstrukturinstanz (6) abgeleiteten zweiten Datenstrukturinstanz (8) mittels des Prozessors erzeugt wird, wobei dessen Datenformat unmittelbar von dem bei der Erzeugung verwendeten Datenformatmusters (7) bestimmt ist, wobei das Datenformatmuster (7) feste Datenformatelemente (7.1) und variable Datenformatelemente (7.2) aufweist und die variablen Datenformatelemente (7.2) über den Namen (5) auf die in der Speichereinheit abgelegten Werte der Datenstrukturinstanzelemente (6.1) der ersten oder zweiten Datenstrukturinstanz (6, 8) verweisen, so dass die variablen Datenformatelemente (7.2) über den Zugriff auf die Werte der Datenstrukturinstanzelemente (6.1) der in der Speichereinheit abgelegten Datenstrukturinstanz (6, 8) befüllt werden,
**dass** der zumindest eine Datenstrukturtyp (3) und das zumindest eine Datenformatmuster (7) vor ihrer Verwendung jeweils aus zumindest einer in der Speichereinheit abgelegten Datei geladen werden und in einer Anweisungsliste (9) festgelegt wird, welcher Datenstrukturtyp (3) und/oder welches Datenformatmuster (7) aus welcher Datei eingelesen wird, so dass die Rechnereinheit erst zur Laufzeit des Programms instruiert wird, auf welche Art und Weise die Umwandlung des ersten Datenformats in das zweite Datenformat zu erfolgen hat,
und **dass** der zweite Datenblock (2) durch den Prozessor ausgegeben wird.

2. Verfahren nach Anspruch 1, **dadurch gekennzeichnet, dass** beim Analysieren des ersten Datenblocks (1) anhand vorausgehender fester Datenstrukturelemente (3.1) des Datenstrukturtyps (3) ein variables Datenstrukturelement (3.2) aufgefunden und zumindest einem Datenstrukturinstanzelement (6.1) ein dem variablen Datenstrukturelement (3.2) entsprechender Wert aus dem ersten Datenblock (1) zugewiesen wird.

3. Verfahren nach Anspruch 2, **dadurch gekennzeichnet, dass** mehrere formatgleiche erste Datenblöcke (1) unter Verwendung eines einzigen Datenstrukturtypen (3) in ein oder mehrere zweite Datenblöcke (2) umgewandelt werden und/oder dass zur Erzeugung mehrerer formatgleicher zweiter Datenblöcke (2) ein einziges Datenformatmuster (7) verwendet wird.

4. Verfahren nach einem der vorhergehenden Ansprüche, **dadurch gekennzeichnet, dass** der zumindest eine erste Datenblock (1) aus einer in der Speichereinheit abgelegten Eingangsdatei eingelesen wird und der zumindest eine zweite Datenblock (2) nach seiner Erzeugung in eine Ausgangsdatei in der Speichereinheit geschrieben wird und in einer Anweisungsliste (9) festgelegt wird, welcher erster Datenblock (1) aus welcher Eingangsdatei eingelesen und welcher zweiter Datenblock (2) in welche Ausgangsdatei geschrieben wird.

5. Verfahren nach Anspruch 4, **dadurch gekennzeichnet, dass** die Anweisungsliste (9) vor ihrer Ausführung aus einer in der Speichereinheit abgelegten Datei geladen wird.

6. Verfahren nach einem der vorhergehenden Ansprüche, **dadurch gekennzeichnet, dass** jeder Datenstrukturinstanz (6) genau ein korrespondierender Datenstrukturtyp (3) zugeordnet wird und/oder dass jeder zweite Datenblock (2) durch genau ein korrespondierendes Datenformatmuster (7) erzeugt wird.

7. Verfahren nach Anspruch 6, **dadurch gekennzeichnet, dass** zumindest ein Wert eines Datenstrukturinstanzelements (6.1) der zumindest einen ersten Datenstrukturinstanz (6) durch zumindest eine Operation verändert wird und dass die durch die Operation veränderte erste Datenstrukturinstanz (6) als zweite Datenstrukturinstanz (8) bei der Erzeugung des zweiten Datenblocks (2) verwendet wird.

8. Verfahren nach einem der vorhergehenden Ansprüche, **dadurch gekennzeichnet, dass** es sich bei einem Datentyp (4) entweder einen regulären Datentyp, einen elementaren Datentyp oder einen komplexen Datentyp handelt, wobei
a) ein regulärer Datentyp durch einen regulären Ausdruck definiert wird,
b) ein elementarer Datentyp durch einen vordefinierten regulären Ausdruck definiert wird, wie er beispielsweise für INTEGER, FLOAT, BOOL, STRING vorausgesetzt wird und
c) ein komplexer Datentyp mit seinem Namen auf die Definition eines Datenstrukturtypen verweist, wobei einem Datenstrukturtyp eine Strukturkategorie (SK) zugeordnet ist, der als Strukturparameter (SP) zumindest ein festes oder variables Datenstrukturelement (3.1, 3.2) oder eine Anordnung aus festen und/oder variablen Datenstrukturelementen (3.1, 3.2) übergeben wird, wobei ein als Strukturparameter (SP) übergebenes variables Datenstrukturelement (3.2) entweder von einem elementaren Datentyp, einem regulären oder einem komplexen Datentypen ist und wobei über die Strukturkategorie (SK) festgelegt wird, wie die Strukturparameter (SP) zur Analyse des ersten Datenblocks und der Erzeugung zumindest eines Datenstrukturinstanzelements verwendet werden.

9. Verfahren nach Anspruch 8, **dadurch gekennzeichnet, dass** einer Strukturkategorie (SK) als Strukturparameter (SP) statt des Namen (5) eines komplexen Datentypen unmittelbar die Definition eines komplexen Datenstrukturtypen übergeben werden.

10. Verfahren nach Anspruch 8 oder 9, **dadurch gekennzeichnet, dass** durch eine erste Strukturkategorie (SEQUENCE) festgelegt wird, dass sämtliche, als Strukturparameter (SP) übergebene Datenstrukturelemente (3.1, 3.2) nacheinander und in genau der angegeben Reihenfolge im ersten Datenblock (1) an der aktuellen Leseposition vorkommen müssen und/oder dass durch eine zweite Strukturkategorie (STREAM) festgelegt wird, dass sämtliche, als Strukturparameter (SP) übergebenen Datenstrukturelemente (3.1, 3.2) nacheinander und in genau der angegeben Reihenfolge im ersten Datenblock (1) nach der aktuellen Leseposition vorkommen müssen, wobei sich der Wert des Datenstrukturinstanzelements (6.1) aus den Zeichen des ersten Datenblocks (1) zwischen der aktuellen Leseposition und dem ersten übergebenen Datenstrukturelement (3.1, 3.2) ergibt und/oder dass durch eine dritte Strukturkategorie (LIST) festgelegt wird, dass sämtliche als Strukturparameter (SP) übergebene Datenstrukturelemente (3.1, 3.2) nacheinander und in genau der angegeben Reihenfolge im ersten Datenblock (1) an der aktuellen Leseposition mindestens einmal vorkommen müssen, aber wiederholt vorkommen können und/oder dass durch eine vierte Strukturkategorie (OPTION) festgelegt wird, dass sämtliche, als Strukturparameter (SP) übergebene Datenstrukturelemente (3.1, 3.2) nacheinander in genau der angegeben Reihenfolge im ersten Datenblock (1) an der aktuellen Leseposition höchstens einmal oder gar nicht vorkommen dürfen, wobei in der korrespondierenden Datenstrukturinstanz (6) über eine Marke (6.2) festgehalten wird, ob die Datenstrukturelemente (3.1, 3.2) im ersten Datenblock (1) vorhanden sind oder nicht und/oder dass durch eine fünfte Strukturkategorie (PERMUTATION) festgelegt wird, dass sämtliche als Strukturparameter (SP) übergebene Datenstrukturelemente (3.1, 3.2) eines komplexen Datenstrukturtypen im ersten Datenblock (1) an der aktuellen Leseposition nacheinander genau einmal vorkommen müssen, die Reihenfolge aber beliebig ist und/oder dass durch eine sechste Strukturkategorie (CHOICE) festgelegt wird, dass genau eines der als Strukturparameter (SP) übergebenen Datenstrukturelemente (3.1, 3.2) des Datenstrukturtypen (3) im ersten Datenblock (1) an der aktuellen Leseposition vorkommen muss, wobei im korrespondieren Datenstrukturinstanzelement (6.1) festgehalten wird, welches Datenstrukturelement (3.1, 3.2) im ersten Datenblock vorhanden ist und/oder dass durch eine achte Strukturkategorie (LINE) festgelegt wird, dass sämtliche, als Strukturparameter SP übergebene Datenstrukturelemente (3.1, 3.2) nacheinander und in genau der angegeben Reihenfolge im ersten Datenblock (1) an der aktuellen Leseposition vorkommen müssen, und zwar innerhalb einer Zeile.

11. Verfahren nach einem der vorhergehenden Ansprüche, **dadurch gekennzeichnet, dass** alle im ersten Datenblock einem Whitespace-Zeichen nachfolgenden Whitespace-Zeichen ignoriert und sämtliche Whitespace-Zeichen wie das Zeichen <Zwischenraum> behandelt werden, wobei ein Whitespace-Zeichen das Zeichen <Zwischenraum>, <Tabulator>, <Wagenrücklauf> oder <NeueZeile> ist.

12. Verfahren nach einem der vorhergehenden Ansprüche, **dadurch gekennzeichnet, dass** mittels Bedingungsanweisungen Teile des Datenformatmusters (7) von der Erzeugung des zweiten Datenblocks (2) ausgeschlossen werden und/oder dass mittels Wiederholungsanweisungen Teile des Datenformatmusters (7) definiert werden, die zur Verarbeitung von Elementen einer Liste vorgesehen sind und/oder dass in einem Datenformatmuster (7) auf selbiges oder ein oder mehrere andere Datenformatmuster (7) referenziert wird und/oder dass in einem Datenformatmuster (7) lokal bekannte Datenstrukturinstanzen (8) erzeugt und deren Werte verändert und weiterverwendet werden.

13. Verfahren nach einem der vorhergehenden Ansprüche, **dadurch gekennzeichnet, dass** ein graphischer Editor (20) zur Erstellung bzw. Veränderung von Datenstrukturtypen (3) vorgesehen ist, wobei in einem ersten Ausgabefenster (20.1) ein erster Datenblock (1) und in einem zweiten Ausgabefenster (20.2) der zu bearbeitende Datenstrukturtyp (3) dargestellt wird und dass die mit den variablen Datenstrukturelementen (3.2) des im zweiten Ausgabefenster (20.2) dargestellten Datenstrukturtyps (3) korrespondierenden variablen Datenblockbereiche des ersten Datenblocks (1) im ersten Ausgabefenster (20.1) durch Markierungen graphisch hervorgehoben werden und dass ein im zweiten Ausgabefenster (20.2) markiertes Datenstrukturelement (3.1, 3.2) gleichzeitig mit dem korrespondierenden Datenblockbereich des ersten Datenblocks (1) im ersten Ausgabefenster (20.1) markiert wird und umgekehrt und/oder dass eine Veränderung am Datenstrukturtypen (3) im zweiten Ausgabefenster (20.2) unmittelbar zur geänderten Darstellung der Markierungen im ersten Ausgabefenster (20.1) führt.

14. Verfahren nach einem der vorhergehenden Ansprüche, **dadurch gekennzeichnet, dass** ein graphischer Editor (21) zur Erstellung bzw. Veränderung von Datenformatmuster (7) bereitgestellt wird, wobei in einem ersten Ausgabefenster (21.1) das zu bearbeitende Datenformatmuster (7), einem zweiten Ausgabefenster (21.2) die den variablen Datenformatelementen (7.2) des Datenformatmusters (7.2) zugeordneten Werte von Datenstrukturinstanzelementen (6.1) und in einem dritten Ausgabefenster (21.3) der durch das Datenformatmuster (7) erzeugte zweite Datenblock (2) dargestellt wird, wobei im ersten Ausgabefenster (21.1) die variablen Datenformatelemente (7.2) und im dritten Ausgabefenster (21.3) die mit diesen variablen Datenformatelementen (7.2) korrespondierenden Datenblockbereiche des zweiten Datenblocks (2) hervorgehoben werden und/oder dass ein im ersten Ausgabefenster (21.1) markiertes Datenformatelement (7.1, 7.2) gleichzeitig mit dem korrespondierenden Datenstrukturinstanzelement (6.1) der Datenstrukturinstanz (6) im zweiten Ausgabefenster (21.2) und gleichzeitig mit dem korrespondierenden Datenblockbereich des zweiten Datenblocks (2) im dritten Ausgabefenster (21.3) markiert wird und umgekehrt und/oder dass die Veränderung eines Wertes eines Datenstrukturinstanzelements (6.1) einer Datenstrukturinstanz (6) in zweitem Ausgabefenster (21.2) unmittelbar zur Veränderung des korrespondierenden Datenblockbereichs im zweiten Datenblock (2) im dritten Ausgabefenster (21.3) führt und umgekehrt.

15. Computerprogrammprodukt ausgebildet zur Durchführung eines Verfahrens nach einem der vorhergehenden Ansprüche.

## Claims

1. A computer-implemented method for converting at least one first data block (1) with a first data format into at least one second data block (2) with a second data format by means of a computer unit, which has at least one processor and at least one memory unit, **characterized**
**in that** the first data block (1), at least one first data structure type (3) and at least one data format pattern (7) is read in by the processor, in that the first data format is represented by the at least one data structure type (3), which defines fixed data structure elements (3.1), which correspond to constant character strings, and variable data structure elements (3.2), which can assume various values of a data type (4), in that one data type (4) is assigned in each case to the variable data structure elements (3.2) of the data structure type (3), and a unique name (5) is also assigned to at least one variable data structure element (3.2), in that the first data block (1) is analysed using the data structure type (3) and the first data structure instance is formed, in that, using the fixed data structure elements (3.1) and the data types (4) of the variable data structure elements (3.2), at least one first data structure instance (6) with at least one data structure instance element (6.1) is created by means of the processor from the first data block (1), wherein it is determined by means of the data structure type (3), which of the data block sections corresponding to the variable data structure elements (3.2) of the data structure type (3) should be assigned as values to the data structure instance elements (6.1) of the data structure instance (6), wherein it is possible to access the value of the data structure instance element (6.1) directly by means of the name (5), wherein the first data structure instance (6) is stored in the memory unit,
**in that** the second data block (2) is created by means of the processor from the data format pattern (7) using the first data structure instance (6) or at least a second data structure instance (8) derived from the first data structure instance (6), wherein the data format thereof is determined directly from the data format pattern (7) used during the creation, wherein the data format pattern (7) has fixed data format elements (7.1) and variable data format elements (7.2) and the variable data format elements (7.2) refer, by means of the name (5), to the values of the data structure instance elements (6.1) of the first or second data structure instance (6, 8) stored in the memory unit, so that the variable data format elements (7.2) are filled via access to the values of the data structure instance elements (6.1) of the data structure instance (6, 8) stored in the memory unit, in that the at least one data structure type (3) and the at least one data format pattern (7) are in each case loaded, prior to their use, from at least one file stored in the memory unit and it is determined in an instruction list (9), which data structure type (3) and/or which data format pattern (7) is read in from which file, so that the computer unit is first instructed during the runtime of the program, in which manner the conversion of the first data format to the second data format is to take place, and in that the second data block (2) is output by the processor.

2. Method according to claim 1, **characterized in that**, during the analysis of the first data block (1), a variable data structure element (3.2) is discovered on the basis of preceding fixed data structure elements (3.1) of the data structure type (3) and a value corresponding to the variable data structure element (3.2) from the first data block (1) is assigned to the at least one data structure instance element (6.1).

3. Method according to claim 2, **characterized in that** a plurality of first data blocks (1) of the same format are converted into one or more second data blocks (2) using a single data structure type (3) and/or **in that** a single data format pattern (7) is used for creating a plurality of second data blocks (2) of the same format.

4. Method according to one of the preceding claims, **characterized in that** the at least one first data block (1) is read in from an input file stored in the memory unit and the at least one second data block (2) is written, after the creation thereof, to an output file in the memory unit and it is determined in an instruction list (9), which first data block (1) is read in from which input file and which second data block (2) is written to which output file.

5. Method according to claim 4, **characterized in that** the instruction list (9) is loaded, prior to its execution, from a file stored in the memory unit.

6. Method according to one of the preceding claims, **characterized in that** exactly one corresponding data structure type (3) is assigned to each data structure instance (6) and/or **in that** each second data block (2) is created by exactly one corresponding data format pattern (7).

7. Method according to claim 6, **characterized in that** at least one value of a data structure instance element (6.1) of the at least one first data structure instance (6) is changed by at least one operation and **in that** the first data structure instance (6) changed by the operation is used as second data structure instance (8) during the creation of the second data block (2).

8. Method according to one of the preceding claims, **characterized in that** one data type (4) is either a regular data type, an elementary data type or a complex data type, wherein
a) a regular data type is defined by a regular expression,
b) an elementary data type is defined by a predefined regular expression, as is provided for example for INTEGER, FLOAT, BOOL, STRING, and
c) a complex data type refers with its name to the definition of a data structure type, wherein a structure category (SK) is assigned to a data structure type, to which at least one fixed or variable data structure element (3.1, 3.2) or an arrangement of fixed and/or variable data structure elements (3.1, 3.2) is passed as structure parameter (SP), wherein a variable data structure element (3.2) passed as structure parameter (SP) is either of an elementary data type, a regular or a complex data type, and wherein, how the structure parameters (SP) are used for analysing the first data block and the creation of at least one data structure instance element is determined by means of the structure category (SK).

9. Method according to claim 8, **characterized in that**, instead of the name (5) of a complex data type, the definition of a complex data structure type is passed directly to a structure category (SK) as structure parameter (SP).

10. Method according to claim 8 or 9, **characterized in that** it is determined by means of a first structure category (SEQUENCE), that all data structure elements (3.1, 3.2) passed as structure parameters (SP) must be present successively and in exactly the specified sequence in the first data block (1) at the current reading position, and/or **in that** it is determined by means of a second structure category (STREAM), that all data structure elements (3.1, 3.2) passed as structure parameters (SP) must be present successively and in exactly the specified sequence in the first data block (1) after the current reading position, wherein the value of the data structure instance element (6.1) results from the characters of the first data block (1) between the current reading position and the first data structure element (3.1, 3.2) passed, and/or **in that** it is determined by means of a third structure category (LIST), that all data structure elements (3.1, 3.2) passed as structure parameters (SP) must be present at least once, but may also be present repeatedly, successively and in exactly the specified sequence in the first data block (1) at the current reading position, and/or **in that** it is determined by means of a fourth structure category (OPTION), that all data structure elements (3.1, 3.2) passed as structure parameters (SP) may be present at most once or even not be present at all successively and in exactly the specified sequence in the first data block (1) at the current reading position, wherein whether the data structure elements (3.1, 3.2) are or are not present in the first data block (1) is determined in the corresponding data structure instance (6) by means of a mark (6.2), and/or **in that** it is determined by means of a fifth structure category (PERMUTATION), that all data structure elements (3.1, 3.2) of a complex data structure type passed as structure parameters (SP) must be present exactly once successively in the first data block (1) at the current reading position, but the sequence is arbitrary, and/or **in that** it is determined by means of a sixth structure category (CHOICE), that exactly one of the data structure elements (3.1, 3.2) of the data structure type (3) passed as structure parameters (SP) must be present in the first data block (1) at the current reading position, wherein it is determined in the corresponding data structure instance element (6.1), which data structure element (3.1, 3.2) is present in the first data block and/or **in that** it is determined by means of an eighth structure category (LINE), that all data structure elements (3.1, 3.2) passed as structure parameters SP must be present successively and in exactly the specified sequence in the first data block (1) at the current reading position, namely within a line.

11. Method according to one of the preceding claims, **characterized in that** all whitespace characters following a whitespace character in the first data block are ignored and all whitespace characters are treated like the <space> character, wherein a whitespace character is the character <space>, <tab>, <carriage return> or <newline>.

12. Method according to one of the preceding claims, **characterized in that** parts of the data format pattern (7) are excluded from the creation of the second data block (2) by means of conditional statements, and/or **in that** parts of the data format pattern (7) are defined by means of repetition instructions, which are provided for processing by elements of a list, and/or **in that** reference is made in a data format pattern (7) to the same or one or more different data format patterns (7), and/or **in that** locally known data structure instances (8) are created in a data format pattern (7) and their values are changed and reused.

13. Method according to one of the preceding claims, **characterized in that** a graphical editor (20) is provided for creating or changing data structure types (3), wherein a first data block (1) is illustrated in a first output window (20.1) and the data structure type (3) to be processed is illustrated in a second output window (20.2), and **in that** the variable data block ranges of the first data block (1) corresponding to the variable data structure elements (3.2) of the data structure type (3) illustrated in the second output window (20.2) are graphically highlighted by means of marks in the first output window (20.1), and **in that** a data structure element (3.1, 3.2) marked in the second output window (20.2) is simultaneously marked with the corresponding data block range of the first data block (1) in the first output window (20.1) and vice versa, and/or in that a change in the data structure type (3) in the second output window (20.2) leads directly to the changed illustration of the marks in the first output window (20.1).

14. Method according to one of the preceding claims, **characterized in that** a graphical editor (21) is provided for creating or changing data format patterns (7), wherein, the data format pattern (7) to be processed is illustrated in a first output window (21.1), the values of data structure instance elements (6.1) assigned to the variable data format elements (7.2) of the data format pattern (7.2) are illustrated in a second output window (21.2), and the second data block (2) created by the data format pattern (7) is illustrated in a third output window (21.3), wherein, in the first output window (21.1), the variable data format elements (7.2) and, in the third output window (21.3), the data block ranges of the second data block (2) corresponding to these variable data format elements (7.2) are highlighted, and/or **in that** a data format element (7.1, 7.2) marked in the first output window (21.1) is marked simultaneously with the corresponding data structure instance element (6.1) of the data structure instance (6) in the second output window (21.2) and simultaneously with the corresponding data block range of the second data block (2) in the third output window (21.3) and vice versa, and/or **in that** the change of a value of a data structure instance element (6.1) of a data structure instance (6) in the second output window (21.2) leads directly to the change of the corresponding data block range in the second data block (2) in the third output window (21.3) and vice versa.

15. A computer program product designed for carrying out a method according to one of the preceding claims.

## Revendications

1. Procédé mis en œuvre par ordinateur, destiné à convertir au moins un premier bloc de données (1) présentant un premier format de données en au moins un deuxième bloc de données (2) présentant un deuxième format de données au moyen d'une unité de calcul, qui comporte au moins un processeur et au moins une unité de mémoire, **caractérisé**
**en ce que** le premier bloc de données (1), au moins un premier type de structure de données (3) et au moins un modèle de format de données (7)sont lues par le processeur, en ce que le premier format de données est reproduit par l'au moins un type de structure de données (3), qui définit des éléments de structure de données (3.1) fixes, qui correspondent à des chaînes de caractère constantes, et des éléments de structure de données (3.2) variables, qui sont aptes à adopter différentes valeurs d'un type de données (4), en ce qu'aux éléments de structure de données (3.2) variables du type de structure de données (3) est affecté chaque fois un type de données (4) et en ce qu'à au moins un élément de structure de données variable (3.2) est également affecté un nom univoque (5), en ce que le premier bloc de données (1) est analysé en utilisant le type de structure de données (3) et en ce que la première instance de structure de données est créée, en ce qu'en utilisant les éléments de structure de données (3.1) fixes et le type de données (4) des éléments de structure de données (3.2) variables, il est créé au moyen du processeur, à partir du premier bloc de données (1) au moins une première instance de structure de données (6) avec au moins un élément d'instance de structure de données (6.1), par le type de structure de données (3) étant fixé lesquelles des zones de blocs de données correspondant aux éléments de structure de données (3.2) variables du type de structure de données (3) doivent être affectées en tant que valeurs aux éléments d'instance de structure de données (6.1) de l'instance de structures de données (6), par l'intermédiaire du nom (5), étant possible d'accéder directement à la valeur de l'élément d'instance de structure de données (6.1), la première instance de structure de données (6) étant sauvegardée dans l'unité de mémoire,
**en ce que** le deuxième bloc de données (2) est créé au moyen du processeur, à partir du modèle de format de données (7), en utilisant la première instance de structure de données (6) ou au moins une deuxième instance de structures de données (8) dérivée de la première instance de structure de données (6), son format de données étant déterminé directement par le modèle de format de données (7) utilisé lors de la création, le modèle de format de données (7) comportant des éléments de format de données (7.1) fixes et des éléments de format de données (7.2) variables et les éléments de format de données (7.2) variables renvoyant via le nom (5) aux valeurs sauvegardées dans l'unité de mémoire de l'élément d'instance de structure de données (6.1) de la première ou de la deuxième instance de structures de données (6, 8), de sorte que les éléments de format de données (7.2) variables soient remplis via l'accès aux valeurs des éléments d'instance de structure de données (6.1) de l'instance de structures de données (6, 8) sauvegardée dans l'unité de mémoire,
**en ce qu'**avant leur utilisation, l'au moins un type de structure de données (3) et l'au moins un modèle de format de données (7) sont chargés chacun à partir d'au moins un fichier sauvegardé dans l'unité de mémoire et en ce qu'il est fixé dans au moins une liste d'instructions (9), quel type de structure de données (3) et/ou quel modèle de format de données (7) est lu à partir de quel fichier, de sorte que l'unité de calcul ne soit instruite qu'au moment de la durée de fonctionnement du programme de quelle manière doit avoir lieu la conversion du premier format de données dans le deuxième format de données,
et **en ce que** le bloc de données (2) est édité par le processeur.

2. Procédé selon la revendication 1, **caractérisé en ce que** lors de l'analyse du premier bloc de données (1) à l'aide d'éléments de structure de données (3.1) fixes précédentes du type de structure de données (3), un élément de structure de données (3.2) variables est trouvé et à au moins un élément d'instance de structure de données (6.1) étant affectée une variable correspondant à l'élément de structure de données variables (3.2) issue du premier bloc de données (1).

3. Procédé selon la revendication 2, **caractérisé en ce que** plusieurs premiers blocs de données (1), de format identique sont convertis en utilisant un unique type de structure de données (3) en un ou en plusieurs deuxièmes blocs de données (2) et/ou **en ce qu'**un unique modèle de format de données (7) est utilisé pour créer plusieurs deuxièmes blocs de données (2) de format identique.

4. Procédé selon l'une quelconque des revendications précédentes, **caractérisé en ce que** l'au moins un premier bloc de données (1) est lu à partir d'un fichier d'entrée sauvegardé dans l'unité de mémoire et **en ce qu'**après sa création, l'au moins un deuxième bloc de données (2) est écrit dans un fichier de données dans l'unité de mémoire et **en ce qu'**il est fixé dans une liste d'instructions (9) quel premier bloc de données (1) est lu à partir de quel fichier d'entrée et quel deuxième bloc de données (2) est écrit dans quel fichier de sortie.

5. Procédé selon la revendication 4, **caractérisé en ce qu'**avant sa réalisation, la liste d'instructions (9) est téléchargée à partir d'un fichier sauvegardé dans l'unité de mémoire.

6. Procédé selon l'une quelconque des revendications précédentes, **caractérisé en ce qu'**à chaque instance de structures de données (6) est affecté précisément un type de structure de données (3) correspondant et/ou **en ce que** chaque deuxième bloc de données (2) est créé par précisément un modèle de format de données (7) correspondant.

7. Procédé selon la revendication 6, **caractérisé en ce qu'**au moins une valeur de l'élément d'instance de structure de données (6.1) de l'au moins une première instance de structure de données (6) est modifiée par au moins une opération et **en ce que** la première instance de structure de données (6) modifiée par l'opération est utilisée comme deuxième instance de structures de données (8), lors de la création du deuxième bloc de données (2).

8. Procédé selon l'une quelconque des revendications précédentes, **caractérisé en ce que** l'un des types de données (4) est soit un type de données régulier, un type de données élémentaire ou un type de données complexe,
a) un type de données régulier étant défini par une expression régulière,
b) un type de données élémentaire étant défini par une expression régulière prédéfinie, telle qu'elle est supposée par exemple pour INTEGER, FLOAT, BOOL, STRING et
c) un type de données complexe renvoyant par son nom à la définition d'un type de structure de données, à un type de structure de données étant affectée une catégorie de structure (SK), à laquelle est transféré en tant que paramètre de structure (SP) au moins un élément de structure de données (3.1, 3.2) fixe ou variable ou un agencement d'éléments de structure de données (3.1, 3.2) fixes et/ou variables, un élément de structure de données (3.2) variable transféré en tant que paramètre de structure (SP) étant soit d'un type de données élémentaire, d'un type de données régulier ou complexe et via la catégorie de structure (SK) étant fixé comment les paramètres de structure (SP) sont utilisés pour l'analyse du premier bloc de données et le création d'au moins un élément d'instance de structure de données.

9. Procédé selon la revendication 8, **caractérisé en ce qu'**à une catégorie de structure (SK) est transférée en tant que paramètre de structure (SP), au lieu du nom (5) d'un type de données complexe, directement la définition d'un type de structure de données complexe.

10. Procédé selon la revendication 8 ou 9, **caractérisé en ce qu'**il est fixé par une première catégorie de structure (SEQUENCE) que l'ensemble des éléments de structure de données (3.1, 3.2) transférés en tant que paramètres de structure (SP) doivent se produire successivement et selon précisément l'ordre chronologique indiqué dans le premier bloc de données (1) à la position de lecture actuelle et/ou **en ce qu'**il est fixé par une deuxième catégorie de structure (STREAM) que l'ensemble des éléments de structure de données (3.1, 3.2) transférés en tant que paramètres de structure (SP) doivent se produire successivement et selon précisément l'ordre chronologique indiqué dans le premier bloc de données (1) après la position de lecture actuelle, la valeur de l'élément d'instance de structure de données (6.1) résultant du signe du premier bloc de données (1) entre la position de lecture actuelle et le premier élément de structure de données (3.1, 3.2) transféré et/ou **en ce qu'**il est fixé par une troisième catégorie de structure (LIST) que l'ensemble des éléments de structure de données (3.1, 3.2) transférés en tant que paramètres de structure (SP) peuvent se produire successivement et selon précisément l'ordre chronologique indiqué dans le premier bloc de données (1) au moins une fois, mais répétitivement à la position de lecture actuelle, et/ou **en ce qu'**il est fixé par une quatrième catégorie de structure (OPTION), que l'ensemble des éléments de structure de données (3.1, 3.2) transférés en tant que paramètres de structure (SP) ne peuvent se produire qu'une fois ou pas du tout selon précisément l'ordre chronologique indiqué dans le premier bloc de données (1) à la position de lecture actuelle, dans l'instance de structures de données (6) correspondante étant consigné par une marque (6.2) si les éléments de structure de données (3.1, 3.2) sont présents ou non dans le premier bloc de données (1) et/ou **en ce qu'**il est fixé par une cinquième catégorie de structure (PERMUTATION) que l'ensemble des éléments de structure de données (3.1, 3.2) transférés en tant que paramètres de structure (SP) d'un type de structure de données complexe doivent se produire successivement précisément une fois dans le premier bloc de données (1) à la position de lecture actuelle, mais que l'ordre chronologique est quelconque et/ou **en ce qu'**il est fixé par une sixième catégorie de structure (CHOICE) que précisément un des éléments de structure de données (3.1, 3.2) transférés en tant que paramètres de structure (SP) du type de structure de données (3) doit se produire dans le premier bloc de données (1) à la position de lecture actuelle, étant consigné dans l'élément d'instance de structure de données (6.1) correspondant quel élément de structure de données (3.1, 3.2) est présent dans le premier bloc de données et/ou **en ce qu'**il est fixé par une huitième catégorie de structure (LINE) que l'ensemble des éléments de structure de données (3.1, 3.2) transférés en tant que paramètres de structure (SP) doivent se produire successivement et dans précisément l'ordre chronologique indiqué dans le premier bloc de données (1) à la position de lecture actuelle, et à savoir dans une ligne.

11. Procédé selon l'une quelconque des revendications précédentes, **caractérisé en ce que** tous les espaces consécutifs à un espace dans le premier bloc de données sont ignorés et **en ce que** tous les espaces sont traités comme le caractère <espacement>, un espace étant le caractère <espacement>, <tabulateur>, <retour chariot> ou <nouvelle ligne>.

12. Procédé selon l'une quelconque des revendications précédentes, **caractérisé en ce qu'**au moyen d'instructions conditionnelles, des parties du modèle de format de données (7) sont exclues de la création du deuxième bloc de données (2) et/ou **en ce qu'**au moyens d'instructions de répétition, des parties du modèle de format de données (7) sont définies, qui sont prévues pour le traitement d'éléments d'une liste et/ou **en ce que** dans un modèle de format de données (7), il est fait référence à ce dernier ou à un ou plusieurs autres modèles de format de données (7) et/ou **en ce que** dans un modèle de format de données (7), des instances de structures de données (8) localement connues sont créées et leurs valeurs sont modifiées et réutilisées.

13. Procédé selon l'une quelconque des revendications précédentes, **caractérisé en ce qu'**un éditeur graphique (20) est prévu pour établir ou modifier des types de structure de données (3), dans une première fenêtre d'édition (20.1) étant représenté un premier bloc de données (1) et dans une deuxième fenêtre d'édition (20.2) étant représenté le type de structure de données (3) qui doit être traité et **en ce que** les zones de blocs de données du premier bloc de données (1) correspondant aux éléments de structure de données (3.2) variables du type de structure de données (3) représentés dans la deuxième fenêtre d'édition (20.2) sont mis en avant graphiquement dans la première fenêtre d'édition (20.1) par des marquages et **en ce qu'**un élément de structure de données (3.1, 3.2) marqué dans la deuxième fenêtre d'édition (20.2) est marqué graphiquement dans la première fenêtre d'édition (20.1), simultanément avec la zone de bloc de données correspondante du premier bloc de données (1) et inversement et/ou **en ce qu'**une modification apportée au type de structure de données (3) dans la deuxième fenêtre d'édition (20.2) mène à la représentation modifiée immédiate des marquages dans la première fenêtre d'édition (20.1).

14. Procédé selon l'une quelconque des revendications précédentes, **caractérisé en ce qu'**un éditeur graphique (21) est mis à disposition pour établir ou pour modifier des modèles de format de données (7), dans une première fenêtre d'édition (21.1) étant représenté le modèle de format de données (7) qui doit être traité, dans une deuxième fenêtre d'édition (21.2) étant représentées les valeurs d'éléments d'instance de structure de données (6.1) affectées aux éléments de format de données (7.2) variables du modèle de format de données (7.2) et dans une troisième fenêtre d'édition (21.3) étant représenté le deuxième format de données (2) créé par le modèle de format de données (7), dans la première fenêtre d'édition (21.1) étant mis en avant les éléments de format de données (7.2) variables et dans la troisième fenêtre d'édition (21.3) étant mises en avant les zones de blocs de données du deuxième bloc de données (2) correspondant auxdits éléments de format de données (7.2) variables et/ou **en ce qu'**un élément de format de données (7.1, 7.2) marqué dans une première fenêtre d'édition (21.1) est marqué simultanément avec l'élément d'instance de structure de données (6.1) correspondant de l'instance de structures de données (6) dans la deuxième fenêtre d'édition (21.2) et simultanément avec la zone de blocs de données correspondante du deuxième bloc de données (2) dans la troisième fenêtre d'édition (21.3) et inversement et/ou **en ce que** la modification d'une valeur d'un élément d'instance de structure de données (6.1) d'une instance de structures de données (6) dans la deuxième fenêtre d'édition (21.2) mène immédiatement à la modification de la zone de blocs de données correspondante dans le deuxième format de données (2) dans la troisième fenêtre d'édition (21.3) et inversement.

15. Produit de programme informatique, conçu pour réaliser un procédé selon l'une quelconque des revendications précédentes.
